# EUROPEAN PATENT APPLICATION

(11) **EP 4 769 121 A1**
(43) Date of publication of application: **01.07.2026**
(21) Application number: 25821108.5
(22) Date of filing: 03.06.2025
(51) Int. Cl.: G06F 8/41

(54) **COMPILING METHOD, ELECTRONIC DEVICE AND COMPUTER READABLE STORAGE MEDIUM**

(30) Priority: 14.06.2024 CN 202410775688
(71) Applicant: HUAWEI TECHNOLOGIES CO., LTD., Shenzhen 518129 (CN)
(72) Inventor: CHEN, Chuanfeng, Shenzhen, Guangdong 518129 (CN); WAN, Qinghua, Shenzhen, Guangdong 518129 (CN); LI, Weisheng, Shenzhen, Guangdong 518129 (CN)
(74) Representative: Epping - Hermann - Fischer
(86) International application number: PCT/CN2025/098875
(87) International publication number: WO 2025/256432

(57) **Abstract**

This application relates to the field of terminal technologies, and provides a compilation method, an electronic device, and a computer-readable storage medium. The method includes: obtaining L types of shader source code, where the L types of shader source code are source code corresponding to shaders of L applications, and L is an integer greater than 1; determining public source code from the L types of shader source code, where the public source code is a common part of the L types of shader source code; compiling the public source code to obtain N types of public executable code, where the N types of public executable code are used to adapt to N running environments, and N is a positive integer; and sending target public executable code to a second device, where the target public executable code is code that adapts to a running environment of the second device in the N types of public executable code. The method can reduce a probability of frame loss and frame freezing in an image rendering process, and help optimize image rendering performance.

## Description

This application claims priority to Chinese Patent Application No. 202410775688.4, filed with the China National Intellectual Property Administration on June 14, 2024 and entitled "COMPILATION METHOD, ELECTRONIC DEVICE, AND COMPUTER-READABLE STORAGE MEDIUM", which is incorporated herein by reference in its entirety.

### TECHNICAL FIELD

This application relates to the field of terminal technologies, and in particular, to a compilation method, an electronic device, and a computer-readable storage medium.

### BACKGROUND

With development of image processing technologies, shaders (shaders) are commonly used for image rendering and visual effect in fields such as game development, graphic design, film and animation production. The shader is a small program run on a graphics processing unit (graphics processing unit, GPU) and is configured to control various phases of an image rendering process, such as color, texture coordinates, and illumination calculation.

For some applications (for example, game applications and video applications) that require image rendering, their software installation packages that users download from an application market typically include shader source code (shader source code). After these applications are installed on a terminal device, the user may normally start these applications. Because the shader source code cannot be directly run on GPU hardware, during running of these applications, the terminal device needs to compile the shader source code into a machine code program (namely, executable code or executable instructions) executable on the GPU, so that the shader can implement the image rendering function.

However, as some scenarios (such as game scenarios or animation scenarios) raise increasingly high requirements on image smoothness, image definition, and image reality, such complex and time-consuming shader source code compilation may cause frame loss and frame freezing in the image rendering process. For example, for a game application that requires a frame rate of 60 frames (that is, 60 frames are run per second), average drawing time of each frame of the game application is only 16.6 milliseconds (ms), but shader source code compilation sometimes takes tens to hundreds of milliseconds. This time-consuming compilation process often causes frame loss and frame freezing during gameplay.

### SUMMARY

In view of this, this application provides a compilation method, an electronic device, and a computer-readable storage medium, to reduce a probability of frame loss and frame freezing in an image rendering process, and help optimize image rendering performance.

To achieve the foregoing objectives, the following technical solutions are used in this application. According to a first aspect, a compilation method is provided, applied to a first device. The method includes:
obtaining L types of shader source code, where the L types of shader source code are source code corresponding to shaders of L applications, and L is an integer greater than 1; determining public source code from the L types of shader source code, where the public source code is a common part of the L types of shader source code; compiling the public source code to obtain N types of public executable code, where the N types of public executable code are used to adapt to N running environments, and N is a positive integer; and sending target public executable code to a second device, where the target public executable code is code that adapts to a running environment of the second device in the N types of public executable code.

The first device may be a server. The compilation method may be implemented by the server, or may be implemented by a module (for example, a processor, a chip, or a chip system) used in the server, or may be implemented by a logical module or software that can implement all or some server functions.

In the image rendering process, one processing method is to perform rendering while compiling, and this method often causes frame loss and frame freezing. In this application, the first device may determine the public source code from the L types of shader source code, compile the public source code, and finally send, to the second device, the target public executable code that adapts to the running environment of the second device. When performing a rendering operation, the second device may directly invoke the public executable code, without a need to compile the public source code part, so that a compilation amount in the image rendering process is reduced, a probability of frame loss and frame freezing in the image rendering process is reduced, and image rendering performance is optimized.

In a possible implementation, the method further includes: determining M types of private source code from the L types of shader source code, where the M types of private source code are the portions of the L types of shader source code excluding the public source code, and M is a positive integer less than or equal to L; separately compiling the M types of private source code to obtain K types of private executable code, where the K types of private executable code are used to adapt to the N running environments, K=M*N, and K is a positive integer; and sending target private executable code to the second device, where the target private executable code is code that adapts to the running environment of the second device in the K types of private executable code.

In some scenarios, in addition to determining the public source code from the L types of shader source code, the first device may further determine the M types of private source code from the L types of shader source code, and compile the M types of private source code to obtain the K types of private executable code; and the first device may send, to the second device, the target private executable code that adapts to the running environment of the second device. In the rendering process, the second device may directly invoke the target public executable code and the target private executable code to perform image rendering, so that complex and time-consuming shader source code compilation is avoided, a probability of frame loss and frame freezing in the image rendering process is further reduced, and image rendering performance is optimized.

In a possible implementation, obtaining L types of shader source code includes: obtaining the L types of shader source code from at least one terminal device, where the at least one terminal device is configured to run the L applications.

Because the L applications are run on the terminal device, and the terminal device detects corresponding shader source code in a process in which each application performs image rendering, the first device may obtain the L types of shader source code through the at least one terminal device.

In a possible implementation, the obtaining the L types of shader source code from the at least one terminal device includes: obtaining the L types of shader source code from a shader of the at least one terminal device, where a running mode of the shader is a debugging mode.

In some scenarios, the terminal device may obtain the shader source code through a shader of the terminal device. For example, when an application is running, the terminal device may set the running mode of the shader to the debugging mode, to obtain the L types of shader source code, without a need to design a dedicated source code detection module. In this way, costs of obtaining the source code can be reduced.

In a possible implementation, the first device includes a collection module, the collection module is configured to obtain shader source code, and obtaining the L types of shader source code from the shader of the at least one terminal device includes: obtaining the L types of shader source code from the shader of the at least one terminal device using the collection module, where the running mode of the shader is the debugging mode.

In some scenarios, the first device obtains the L types of shader source code from the shader of the at least one terminal device using the collection module, without a need to manually collect the L types of shader source code or design a dedicated source code detection module. This source code obtaining manner is efficient and convenient, and has low costs.

In a possible implementation, the first device includes a collection module, the collection module is configured to obtain shader source code. The obtaining the L types of shader source code from the at least one terminal device includes: obtaining the L types of shader source code from the at least one terminal device using the collection module.

In some scenarios, in comparison with manual collection of the L types of shader source code, it is simple, efficient, and low-cost that the first device automatically obtains the L types of shader source code from the at least one terminal device using the collection module.

In a possible implementation, the determining the M types of private source code from the L types of shader source code includes: determining the M types of private source code from the L types of shader source code based on a first parameter, where the first parameter includes use frequency information, and M is less than L.

In some scenarios, to improve usage of the private executable code, the first device may remove, from the L types of shader source code based on the first parameter, private source code corresponding to some uncommonly used applications, and reserve the private source code corresponding to the M commonly used applications (that is, the M types of private source code), to ensure that the private executable code obtained by compiling the M types of private source code has high usage.

In a possible implementation, the determining the public source code from the L types of shader source code includes: determining the public source code from the L types of shader source code based on the first parameter, where the first parameter includes the use frequency information.

In some scenarios, to ensure that the public source code determined from the L types of shader source code is extensive, in this application, shader source code that is frequently invoked (or used) is selected from the L types of shader source code based on the first parameter (for example, the use frequency information) as the public source code, so that the public executable code obtained by compiling the public source code subsequently can be invoked by a plurality of applications, and a probability of frame loss and frame freezing in the image rendering process in more applications is further reduced

In a possible implementation, the separately compiling the M types of private source code includes: separately compiling the M types of private source code based on a second parameter, where the second parameter includes at least one of a GPU version number or an OS version number.

Because different GPU version numbers and/or OS version numbers may be used to establish different running environments, to compile the private source code into private executable code that can adapt to a plurality of running environments, the first device may compile the private source code based on the GPU version number and/or the OS version number, to meet requirements for the private executable code in different running environments.

In a possible implementation, the compiling the public source code includes: compiling the public source code based on the second parameter, where the second parameter includes at least one of the GPU version number or the OS version number.

Because different GPU version numbers and/or OS version numbers may be used to establish different running environments, the first device may compile, based on the GPU version number and/or the OS version number, the public source code into public executable code that can adapt to different running environments, to meet requirements for the public executable code in different running environments.

In a possible implementation, before the sending the target private executable code to the second device, the method further includes: receiving second request information from the second device, where the second request information is used to request to download a software installation package of a first application, and the first application is one of the L applications; and the sending the target private executable code to the second device includes: sending the software installation package of the first application and the corresponding target private executable code to the second device in response to the second request information.

In some scenarios, the first device may deliver the target private executable code and the software installation package of the first application to the second device based on the second request information, to avoid forcibly delivering data and affecting user experience when a user does not have a requirement.

In a possible implementation, the second request information includes a third parameter and a first application identifier, the third parameter is used to determine the running environment of the second device, and before sending the software installation package of the first application and the corresponding target private executable code to the second device, the method further includes: determining the target private executable code from the K types of private executable code based on the third parameter and the first application identifier.

Because the K types of private executable code are executable code that corresponds to the M applications and that can adapt to the N running environments, the first device may quickly determine, from the K types of private executable code based on the first application identifier, the N types of private executable code corresponding to the first application, and quickly determine, from the N types of private executable code based on the third parameter, the target private executable code that adapts to the running environment of the second device.

In a possible implementation, before the sending the target public executable code to the second device, the method further includes: receiving first request information from the second device, where the first request information is used to request to obtain the target public executable code; and the sending the target public executable code to the second device includes: sending the target public executable code to the second device in response to the first request information.

In some scenarios, the first device may send the target public executable code to the second device based on the first request information, to avoid forcibly delivering data and affecting user experience when a user does not have a requirement.

In a possible implementation, the receiving the first request information from the second device includes: receiving the first request information from the second device within a preset time period. In some scenarios, the first device may receive the first request information from the second device within the preset time period (for example, at a specific interval), and periodically deliver the target public executable code to the second device, to ensure that public executable code currently stored in the second device is consistent with latest public executable code of the first device.

In a possible implementation, the first request information includes the third parameter, and the third parameter is used to determine the running environment of the second device; and before the sending the target public executable code to the second device, the method further includes: determining the target public executable code from the N types of public executable code based on the third parameter.

Because different devices may have different running environments, the second device may report the third parameter to the first device based on the first request information, so that the first device determines, from the N types of public executable code based on the third parameter, the target public executable code that adapts to the running environment of the second device, to avoid incorrectly delivering the executable code that does not match the running environment of the device.

In a possible implementation, the third parameter includes at least one of the GPU version number of the second device or the OS version number of the second device.

Because the K types of private executable code are private executable code compiled by the first device based on a parameter like a GPU version number, the third parameter helps the first device quickly determine, from the K types of private executable code, the target private executable code that adapts to the second device.

According to a second aspect, a compilation method is provided, applied to a second device. The method includes:
sending first request information, where the first request information is used to request to obtain target public executable code, the target public executable code is code that adapts to a running environment of the second device in N types of public executable code, the N types of public executable code are a compilation result of public source code, the public source code is a common part of L types of shader source code, the L types of shader source code are source code corresponding to shaders of L applications, L is an integer greater than 1, and N is a positive integer; and receiving the target public executable code.

The second device may be a terminal device. The compilation method may be implemented by the terminal device, or may be implemented by a module (for example, a processor, a chip, or a chip system) used in the terminal device, or may be implemented by a logical module or software that can implement all or some functions of the terminal device.

In the foregoing method, the second device may send the first request information to the first device, to obtain the target public executable code from the first device. In this way, the second device may directly invoke the public executable code during image rendering, without a need to trigger compilation of the public source code, so that a compilation amount of the source code is reduced, a probability of frame loss and frame freezing in an image rendering process is reduced, and image rendering performance is optimized.

In a possible implementation, the sending the first request information includes: sending the first request information within a preset time period.

In some scenarios, the second device may send the first request information to the first device within a preset time period (for example, at a specific interval), and receive the target public executable code from the first device, to ensure that local public executable code is always consistent with latest public executable code of the first device.

In a possible implementation, the first request information includes a third parameter, and the third parameter is used to determine the running environment of the second device, and is further used to determine the target public executable code.

Because different devices may have different running environments, the second device may report the third parameter to the first device based on the first request information, so that the first device determines, from the N types of public executable code based on the third parameter, the target public executable code that adapts to the running environment of the second device, to avoid incorrectly delivering the executable code that does not match the running environment of the device.

In a possible implementation, the method further includes: sending second request information, where the second request information is used to request to download a software installation package of a first application, and the first application is one of the L applications; and receiving the software installation package of the first application and the target private executable code.

In some scenarios, the first device may deliver the target private executable code and the software installation package of the first application to the second device based on the second request information, to avoid forcibly delivering data and affecting user experience when a user does not have a requirement.

In a possible implementation, the second request information includes the third parameter and a first application identifier, the third parameter is used to determine the running environment of the second device, and the third parameter and the first application identifier are used to determine the target private executable code.

Because the K types of private executable code are executable code that corresponds to the M applications and that can adapt to the N running environments, the first device may quickly determine, from the K types of private executable code based on the first application identifier, the N types of private executable code corresponding to the first application, and quickly determine, from the N types of private executable code based on the third parameter, the target private executable code that adapts to the running environment of the second device.

In a possible implementation, the third parameter includes at least one of the GPU version number of the second device or the OS version number of the second device.

Because the K types of private executable code are executable code compiled by the first device based on a device parameter (for example, a GPU version number), the third parameter helps the first device quickly determine, from the K types of private executable code, the target private executable code that adapts to the second device.

In a possible implementation, before the sending the second request information, the method further includes: receiving a first operation instruction, where the first operation instruction is used to trigger downloading of the software installation package of the first application; and generating the second request information based on the first operation instruction.

In a possible implementation, the receiving the first operation instruction includes: receiving the first operation instruction from a display interface of an application market, where the application market is run on the second device, and the first operation instruction is an installation instruction or an update instruction.

In some cases, a user may trigger the installation instruction or the update instruction in the display interface of the application market based on a requirement of the user, to avoid a case like a large amount of occupied network traffic, extra traffic consumption, and local device frame freezing caused by automatic installation or automatic update of an application.

In a possible implementation, the receiving the first operation instruction includes: receiving the first operation instruction from the display interface of the first application, where the first operation instruction is the update instruction.

In some cases, the user may trigger the update instruction in the display interface of the first application based on a requirement of the user, to avoid a case like a large amount of occupied network traffic, extra traffic consumption, and local device frame freezing caused by automatic update of an application.

In a possible implementation, before the generating the second request information based on the first operation instruction, the method further includes: instructing, based on the first operation instruction, the application market to generate the second request information, where the application market is run on the second device.

In some scenarios, when the user triggers update in a display interface of an application (for example, the first application), previously stored private executable code may not be updated for an updated application. To ensure that the updated application can update the previously stored private executable code in time, in this case, although the user triggers the update in the display interface of the application, the second device still instructs, based on the first operation instruction, the application market to generate the second request information, to control the application market to update the first application and download the corresponding private executable code, so as to avoid a case in which image rendering performance is affected due to mismatch between the update of the application and the update of the private executable code.

According to a third aspect, an embodiment of this application provides an electronic device. The electronic device includes a processor and a memory. The memory is configured to store a computer program. The processor is configured to invoke the computer program from the memory and run the computer program, so that the electronic device performs the method according to the first aspect and the possible implementations of the first aspect.

According to a fourth aspect, an embodiment of this application provides an electronic device. The electronic device includes a processor and a memory. The memory is configured to store a computer program. The processor is configured to invoke the computer program from the memory and run the computer program, so that the electronic device performs the method according to the second aspect and the possible implementations of the second aspect.

According to a fifth aspect, an embodiment of this application provides a computer-readable storage medium. The computer-readable storage medium stores a computer program. When the computer program is executed by a processor, the processor is enabled to perform the method according to the first aspect and the possible implementations of the first aspect.

According to a sixth aspect, an embodiment of this application provides a computer-readable storage medium. The computer-readable storage medium stores a computer program. When the computer program is executed by a processor, the processor is enabled to perform the method according to the second aspect and the possible implementations of the second aspect. According to a seventh aspect, an embodiment of this application provides a computer program product. The computer program product includes computer program code. When the computer program code is run by a terminal device, the terminal device is enabled to perform the method according to the first aspect and the possible implementations of the first aspect.

According to an eighth aspect, an embodiment of this application provides a computer program product. The computer program product includes computer program code. When the computer program code is run by a terminal device, the terminal device is enabled to perform the method according to the second aspect and the possible implementations of the second aspect.

According to a ninth aspect, an embodiment of this application provides a chip system. The chip system includes a processing circuit and a storage medium, and the storage medium stores computer program instructions. When the computer program instructions are executed by the processing circuit, the method according to the first aspect and the possible implementations of the first aspect is implemented.

According to a tenth aspect, an embodiment of this application provides a chip system. The chip system includes a processing circuit and a storage medium, and the storage medium stores computer program instructions. When the computer program instructions are executed by the processing circuit, the method according to the second aspect and the possible implementations of the second aspect is implemented.

Optionally, in the foregoing chip system, the processing circuit may be replaced with a processor, and the storage medium may be replaced with a memory. Optionally, the chip system may further include a communication interface, and the communication interface is configured to implement communication between the chip system and a receiving device.

Beneficial effects of the technical solutions in the third aspect to the tenth aspect of this application are the same as beneficial effects of the technical solutions in the first aspect or the second aspect. Details are not described herein again.

### BRIEF DESCRIPTION OF DRAWINGS

FIG. 1 is a diagram of an image rendering scenario according to an embodiment of this application;
FIG. 2 is a diagram of a hardware structure of an electronic device 100 according to an embodiment of this application;
FIG. 3 is a diagram of a software architecture of an electronic device 100 according to an embodiment of this application;
FIG. 4 is a diagram of a software architecture of a terminal device according to an embodiment of this application;
FIG. 5A and FIG. 5B are diagrams of two application scenarios according to an embodiment of this application;
FIG. 6 is a schematic flowchart of a compilation method 600 according to an embodiment of this application;
FIG. 7A to FIG. 7C are diagrams of three application scenarios according to an embodiment of this application;
FIG. 8A and FIG. 8B are diagrams of other two application scenarios according to an embodiment of this application;
FIG. 9 is a diagram of interaction between a first device and a second device according to an embodiment of this application;
FIG. 10 is another diagram of interaction between a first device and a second device according to an embodiment of this application;
FIG. 11 is a schematic flowchart of performing an update operation by an application market according to an embodiment of this application;
FIG. 12A to FIG. 12D are diagrams of an application installation scenario according to an embodiment of this application;
FIG. 13A to FIG. 13D are diagrams of an application update scenario according to an embodiment of this application;
FIG. 14A to FIG. 14D are diagrams of another application update scenario according to an embodiment of this application;
FIG. 15A to FIG. 15D are diagrams of a scenario in which update is performed later according to an embodiment of this application;
FIG. 16A to FIG. 16D are diagrams of an update setting scenario according to an embodiment of this application;
FIG. 17A to FIG. 17D are diagrams of still another application update scenario according to an embodiment of this application;
FIG. 18A to FIG. 18D are diagrams of an acceleration package downloading scenario according to an embodiment of this application; and
FIG. 19 is a diagram of a structure of an electronic device 1900 according to an embodiment of this application.

### DESCRIPTION OF EMBODIMENTS

To clearly describe the technical solutions in embodiments of this application, the following clearly and completely describes the technical solutions in embodiments of this application with reference to the accompanying drawings in embodiments of this application. It should be noted that embodiments described in this application are merely some rather than all of the embodiments of this application.

In descriptions of this application, unless otherwise specified, "/" means "or". For example, A/B may represent A or B. A term "and/or" in the descriptions of this application describes only an association relationship between associated objects and represents that three relationships may exist. For example and/or B may represent the following three cases: Only A exists, both A and B exist, and only B exists. "At least one" means one or more, and "a plurality of" means two or more. In the specification and the claims of this application, the terms "first", "second", and the like are intended to distinguish between different objects or distinguish between different processing of a same object, but do not indicate a particular order of the objects. For example, the first terminal, the second terminal, and the like are used to distinguish different terminal devices, but are not used to describe a specific order of the terminal devices. A person skilled in the art may understand that the words such as "first" and "second" limit neither of a quantity and an execution sequence, and the words such as "first" and "second" do not indicate a definite difference either.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner. The terms "include", "comprise", "have", and their variants all mean "include but are not limited to", unless otherwise specifically emphasized.

To facilitate understanding of this application, the following describes some technical terms involved in this application.

### 1. Shader (shader)

The shader is used to implement image rendering, to replace an editable program of a fixed rendering pipeline. The shader is typically a small program that runs on a graphics processing unit (graphics processing unit, GPU) to control different aspects of graphics, such as color, illumination, texture mapping, and projection. During image rendering, the shader is used to process a geometric shape in a scenario and calculate a final color or attribute for each pixel or vertex. There are generally two types of shaders: vertex shaders (vertex shader) and fragment shaders (fragment shader). The vertex shader is mainly responsible for calculation of a geometric relationship of a vertex, for example, calculating attributes such as a final position, a color, and a normal of each vertex. In addition, the vertex shader may further perform operations such as coordinate transformation, illumination calculation, and vertex animation. The fragment shader, also referred to as a pixel shader (pixel shader), is mainly responsible for calculation of a fragment color. For example, the fragment shader may process each pixel to calculate a final color of the pixel; or may perform operations such as texture sampling, illumination calculation, and shadow calculation to generate a final image.

### 2. Shader source code (shader source code)

The shader source code is source code used to implement image rendering written by software developers when writing source code of software. The shader source code is typically packaged into a software installation package, and is finally installed on a terminal device via an application market or another channel (for example, a browser).

### 3. Shader compilation

Because the shader source code cannot be directly run on specific hardware (for example, a GPU) or an operating system, but needs to be compiled into an executable instruction (shader bin) to run on the hardware, shader compilation is to convert the shader source code into a machine code program executable on the specific hardware (for example, the GPU) or the operating system. The executable machine code program may also be referred to as executable code, or an executable program, or an executable instruction (shader bin).

### 4. GPU

The GPU, also referred to as a display core, a visual processor, or a display chip, is a microprocessor that is specially used to perform image and graphics-related computation on a personal computer, a workstation, a game console, and some mobile devices (such as a tablet computer and a smartphone). The GPU reduces dependency on a CPU and performs a part of original CPU work. Especially, core technologies used by the GPU during 3D graphics processing include hardware T&L (geometric conversion and illumination processing), material mapping and vertex mixing in a vertical environment, texture compression and bump mapping, and dual-texture 4-pixel 256-bit rendering engine.

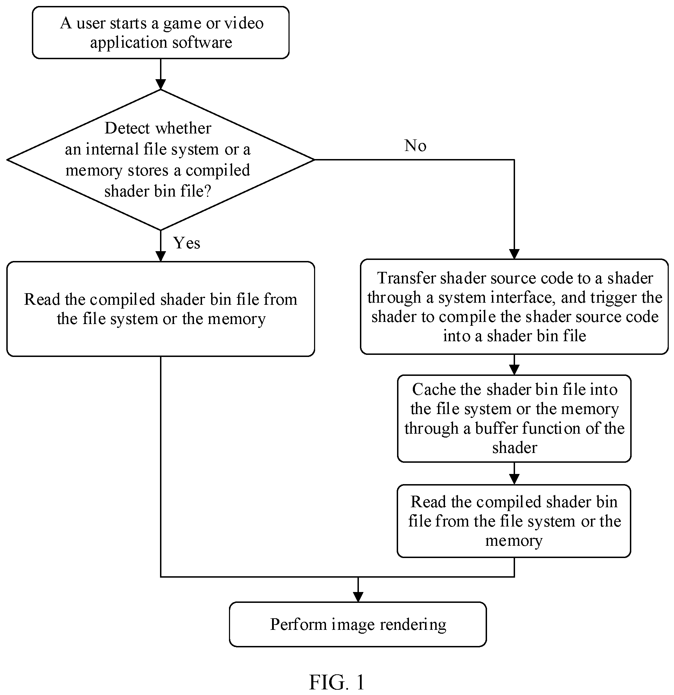

With reference to an image rendering scenario shown in FIG. 1, the following describes a technical problem to be resolved in this application.

As shown in FIG. 1, a game or video application software is installed on a terminal device. After a user starts the game or video application software, the terminal device executes code related to image rendering. Before performing an image rendering function, the terminal device first detects whether an internal file system or a memory stores a compiled shader bin file. If the internal file system or the memory has stored the compiled shader bin file, it indicates that the application software has been previously run on the terminal device. In this case, the terminal device may read the compiled shader bin file from the file system or the memory to perform image rendering. If the internal file system or the memory has not stored the compiled shader bin file, it indicates that the application software is run on the terminal device for the first time. In this case, the terminal device may transfer shader source code to a shader through a system interface, and trigger the shader to compile the shader source code into a shader bin file. Finally, the terminal device may cache the compiled shader bin file into the file system or the memory through a buffer function of the shader, so that the terminal device reads the compiled shader bin file from the file system or the memory to perform image rendering. It can be learned that in a scenario in which the application software is run on the terminal device for the first time, because the application software performs the image rendering function for the first time, the file system or the memory of the terminal device does not have the compiled shader bin file. In this case, in an image rendering process, the terminal device needs to trigger the shader to compile the shader source code in real time. However, complex and time-consuming shader source code compilation may cause frame loss and frame freezing in the image rendering process. Therefore, this application provides a compilation method. The compilation method can reduce a probability of frame loss and frame freezing in an image rendering process, and help optimize image rendering performance.

In the compilation method, a server (that is, an example of a first device) may first obtain public source code from shader source code of a plurality of applications, then compile the public source code to obtain public executable code, and finally deliver the public executable code to a terminal device (that is, an example of a second device), so that a quantity of tasks of compiling the shader source code in an image rendering process of the terminal device is reduced, and a probability of frame loss and frame freezing in the image rendering process is reduced.

It should be noted that the compilation method may be performed by the first device (or the second device). In some scenarios, the first device may be a server, for example, a service processing server, a computing server, or a data server. The second device may be a terminal device (or user equipment (user equipment, UE)). The terminal device may be a mobile phone (mobile phone), a watch, a head unit, a smart screen, a smart television (television, TV), a tablet computer (Pad), a wearable device, a virtual reality (virtual reality, VR) device, an augmented reality (augmented reality, AR) device, a projector, a vehicle-mounted playing system, or the like. A specific type of the terminal device is not limited in embodiments of this application.

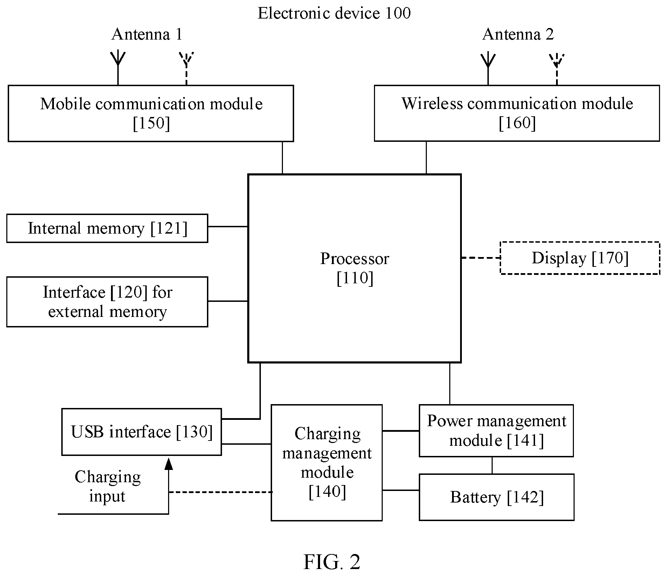

To better understand embodiments of this application, the following describes, with reference to FIG. 2, a hardware structure of an electronic device 100 applicable to this application. The electronic device 100 may be the first device (or the second device).

The electronic device 100 may include a processor 110, an interface 120 for external memory, an internal memory 121, a universal serial bus (universal serial bus, USB) connector 130, a charging management module 140, a power management module 141, a battery 142, an antenna 1, an antenna 2, a mobile communication module 150, a wireless communication module 160, a display 170, and the like.

The processor 110 may include one or more processing units. For example, the processor 110 may include an application processor (application processor, AP), a modem processor, a graphics processing unit (graphics processing unit, GPU), a controller, a digital signal processor (digital signal processor, DSP), and a baseband processor. Different processing units may be independent components, or may be integrated into one or more processors.

The processor 110 may generate an operation control signal based on instruction operation code and a time sequence signal, to complete control instruction fetching and instruction execution. A memory may be further disposed in the processor 110, and is configured to store instructions and data. In some embodiments, the memory in the processor 110 may be a cache. The memory may store instructions or data just used or frequently used by the processor 110. If the processor 110 needs to use the instructions or the data, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal serial bus (universal serial bus, USB) interface, and the like. The processor 110 may be connected to a module like a wireless communication module or a display through at least one of the foregoing interfaces.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The USB connector 130 is an interface complying with a USB standard specification, and may be configured to connect the electronic device 100 and a peripheral device. The charging management module 140 is configured to receive a charging input of the charger. The charger may be a wireless charger or a wired charger. The power management module 141 is configured to connect to the battery 142, the charging management module 140, and the processor 110. The power management module 141 receives inputs from the battery 142 and/or the charging management module 140, and supplies power to the processor 110, the internal memory 121, the display 170, the wireless communication module 160, and the like. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. In some embodiments, at least some functional modules in the mobile communication module 150 may be disposed in a same device as at least some modules of the processor 110.

The wireless communication module 160 may provide a wireless communication solution that is applied to the electronic device 100 and includes a wireless local area network (wireless local area network, WLAN) (like a Wi-Fi network), Bluetooth (Bluetooth, BT), and a near field communication technology (near field communication, NFC).

In some embodiments, in the electronic device 100, the antenna 1 and the mobile communication module 150 are coupled, and the antenna 2 and the wireless communication module 160 are coupled, so that the electronic device 100 can communicate with a network and another terminal device by using a wireless communication technology. The wireless communication technology may include a global system for mobile communications (global system for mobile communications, GSM), a general packet radio service (general packet radio service, GPRS), code division multiple access (code division multiple access, CDMA), or the like.

The electronic device 100 may implement a display function through the GPU, the display 170, the application processor, and the like. The processor 110 may include one or more GPUs, and the one or more GPUs execute program instructions to generate or change display information.

The interface 120 for external memory may be used to connect to an external memory card, for example, a micro SD card, to extend a storage capability of the electronic device 100. The external memory card communicates with the processor 110 through the interface 120 for external memory, to implement a data storage function. For example, files such as pictures or videos are stored in the external memory card. Alternatively, files such as pictures and videos are transmitted from the electronic device 100 to the external memory card.

The internal memory 121 may be configured to store computer-executable program code. The executable program code includes instructions. The internal memory 121 may include a program storage area and a data storage area. The program storage area may store an operating system, an application (for example, a game application and a video application) required by at least one function, and the like. The data storage area may store data (for example, contact information and information about an external to-be-connected device) or the like created in a process of using the electronic device 100. In addition, the internal memory 121 may include a high-speed random access memory, or may include a non-volatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods of the electronic device 100 and data processing.

The electronic device 100 may display image data like a game picture and a movie animation through the display 170.

The display 170 is configured to display interface information like an application market, a game picture, and video playing. The display 170 includes a display panel. The display panel may be a liquid crystal display (liquid crystal display, LCD), an organic light-emitting diode (organic light-emitting diode, OLED), or the like. In some embodiments, the electronic device 100 may include one or more displays 170. In some embodiments, the display may be a foldable display or a flexible display.

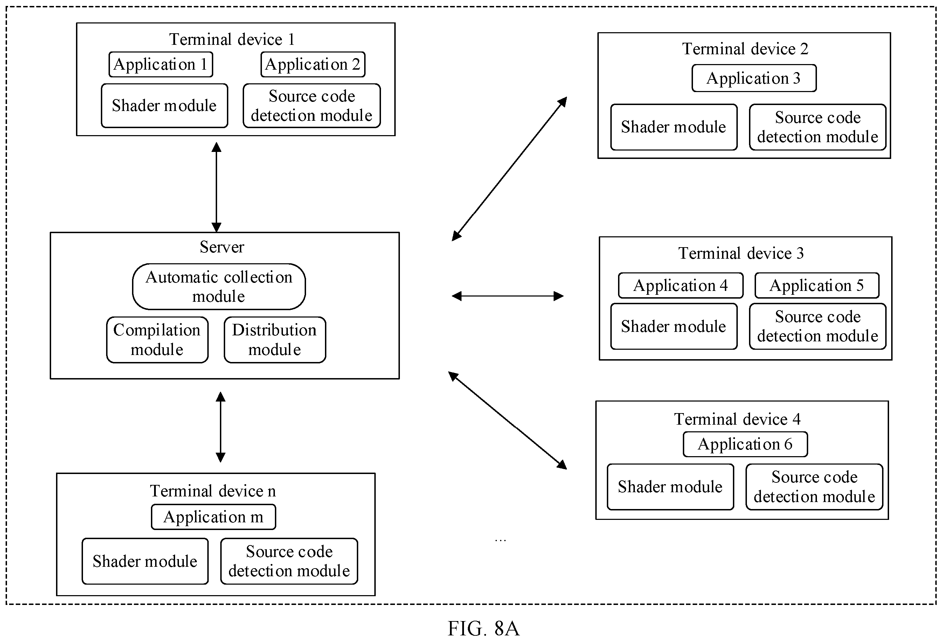

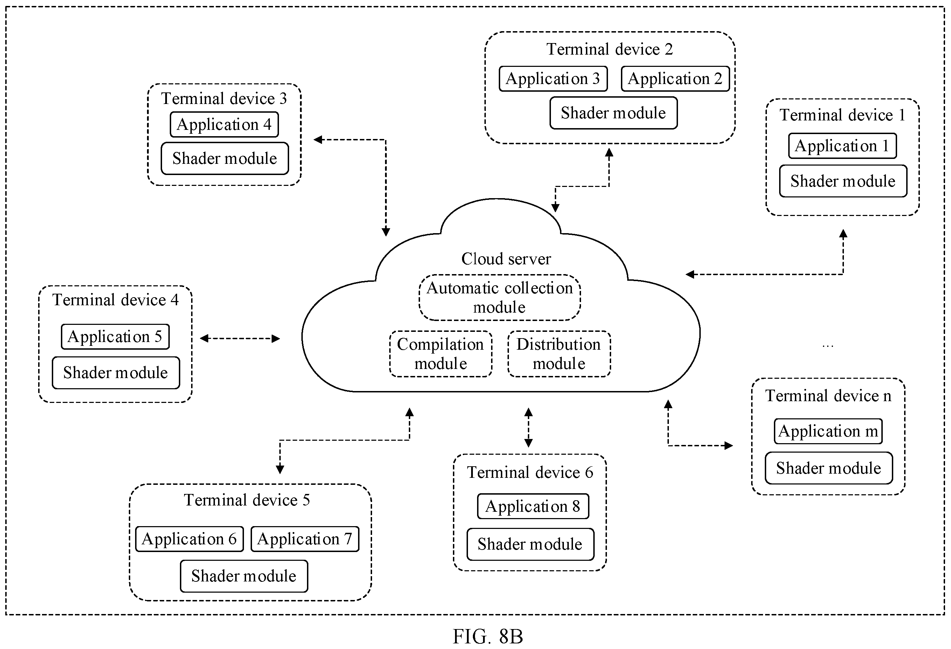

It should be noted that, in some scenarios, for example, the electronic device 100 is a terminal device. Because most applications run on the terminal device have a picture display requirement, the electronic device 100 needs to be equipped with a display 170. The display 170 may display various image pictures in an image rendering process of each application. In some other scenarios, for example, the electronic device 100 is a server. The server mainly provides a computing service, for example, compiles shader source code, and has no picture display requirement. In this case, the server may not have a display 170. For another example, in a scenario in which the server is connected to an entity terminal (refer to FIG. 8A below), because each application is run on an entity terminal having a display, and the server mainly provides computing power (for example, provides a compilation service), the server may not have a display 170. Certainly, in some other scenarios, the server may also have a display 170. For example, refer to FIG. 8B below. Various virtual terminals are deployed on the server, and these virtual terminals are configured to run application software that requires picture display, like a game or a video. In this case, the server needs to have a display 170.

It may be understood that the structure shown in this embodiment of this application does not constitute a specific limitation on the electronic device 100. In some other embodiments of this application, the electronic device 100 may further include more or fewer components than those shown in FIG. 2, some components may be combined, some components may be split, or different component arrangements may be used. The components shown in FIG. 2 may be implemented by using hardware, software, or a combination of software and hardware.

In addition, it should be noted that the software system of the electronic device 100 may use a layered architecture, a service architecture, or the like. In embodiments of the present invention, an Android operating system of a layered architecture is used as an example to describe the software architecture of the electronic device 100. It should be understood that solutions provided in this application may also be applied to another type of operating system like a HarmonyOS (Harmony) system, an Apple operating system, or a Windows operating system.

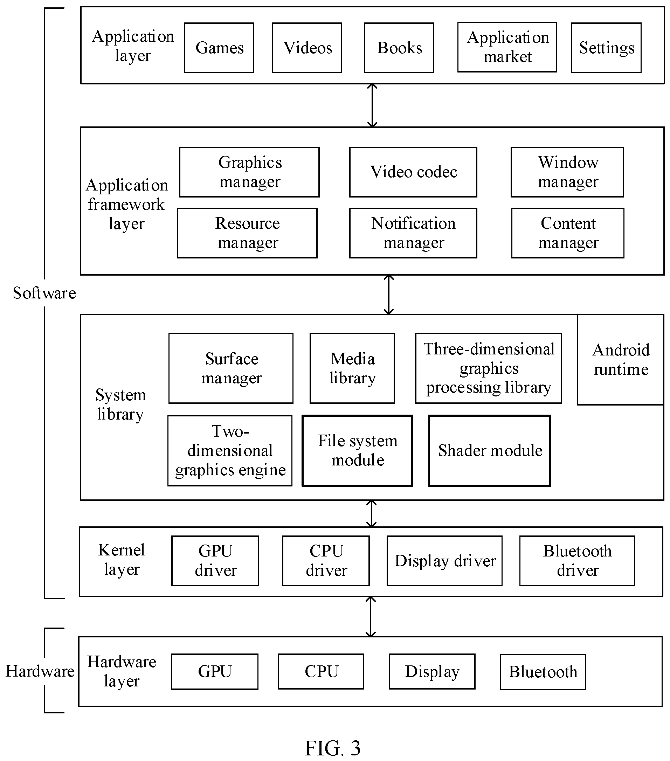

FIG. 3 is a diagram of a software architecture of an electronic device 100 according to an embodiment of this application. As shown in FIG. 3, in a layered architecture of the electronic device 100, software is divided into several layers, and each layer has a clear role and task. The layers communicate with each other through a software interface. In some embodiments, the software architecture is divided into an application (application, APP) layer, an application framework (framework, FWK) layer, an Android runtime (Android runtime, ART) and system library, a hardware abstraction layer (hardware abstraction layer, HAL), and a kernel (kernel) layer from top to bottom.

The application layer, also known as the app layer, may include a series of application packages. For example, the application package may include Games, Videos, Books, Application market, Settings, and the like. When the foregoing application package is run, each service module provided by the application framework layer may be accessed through an application programming interface (application programming interface, API), and a corresponding intelligent service is executed.

The application framework (Framework, FWK) layer provides an application programming interface (application programming interface, API) and a programming framework for an application at the application layer. The application framework layer includes some predefined functions. As shown in FIG. 3, the application framework layer may include a graphics manager, a video codec, a window manager, a resource manager, a notification manager, a content manager, and the like. The graphics manager is responsible for invoking an interface in a graphics library to complete drawing, rendering, and composition of an interface. The video codec is responsible for video encoding and decoding. The window manager manages all windows in a system. The resource manager is responsible for managing system resources and providing various resources for an application, such as a picture and a video file. The notification manager is responsible for managing a prompt message in a status bar on the top of a mobile phone. The content provider is configured to store and obtain data (like a video and a picture), and enable the data to be accessed by an application.

The system library (which may also be referred to as a native C/C++ library) may include a plurality of functional modules, for example, a surface manager (surface manager), a media library (media library), a three-dimensional graphics processing library, a two-dimensional graphics engine, a file system module (which may also be referred to as a file system), and a shader module.

The surface manager is configured to manage a display subsystem, and provide fusion of two-dimensional and three-dimensional graphics layers for a plurality of applications. The media library supports playing and recording of a plurality of public audio and video formats, and static image files. The media library may support a plurality of audio and video encoding formats, such as MPEG-4, H.264, MP3, AAC, AMR, JPG and PNG. The three-dimensional graphics processing library is configured to implement three-dimensional graphics drawing, image rendering, synthesis, layer processing, and the like. The two-dimensional graphics engine is a drawing engine for drawing a two-dimensional image. The file system module is configured to cache a shader bin file. The shader module (which may also be referred to as a shader) is configured to implement an image rendering function of the shader, for example, perform calculation of vertex, color, texture, and the like.

The Android runtime includes a kernel library and Android runtime. The Android runtime is responsible for converting source code into machine code. The Android runtime mainly includes an ahead-of-time (ahead-of-time, AOT) compilation technology and a just-in-time (just-in-time, JIT) compilation technology.

The kernel library is mainly configured to provide functions of basic Java libraries, such as a basic data structure library, a mathematics library, an I/O library, a tool library, a database, and a network library. The core library provides the API for a user to develop an Android application.

The hardware abstraction layer runs in user space (user space), encapsulates a kernel layer driver, and provides an invocation interface for an upper layer. The hardware abstraction layer includes a display module, a Bluetooth module, and the like.

The kernel layer is a layer between hardware and software. The kernel layer includes but is not limited to a GPU driver, a CPU driver, a display driver, a Bluetooth driver, and the like, to drive the GPU, the CPU, the display, the Bluetooth, and the like at the hardware layer to work.

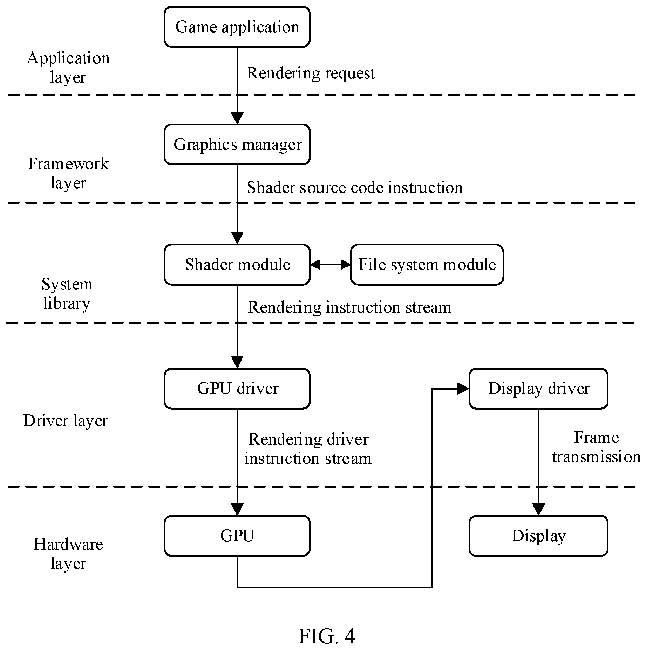

The following uses an example in which the second device having the structures shown in FIG. 2 and FIG. 3 is a terminal device. With reference to a diagram of a software architecture of the terminal device shown in FIG. 4, for example, an overall procedure of performing the foregoing compilation method by the terminal device is described.

When a user opens the game application at the application layer, the game application is run on an operating system (operating system, OS) of the terminal device. When the game application performs graphics rendering, the game application may generate a rendering request, and send the rendering request to the graphics manager. The graphics manager may generate a shader source code instruction based on the rendering request, and send the shader source code instruction to the shader module in the system library. After receiving the shader source code, the shader module detects whether the file system module has a compiled shader bin file. If the file system module has the compiled shader bin file, the shader module generates an image rendering instruction stream (for example, a scenario drawing instruction or an interface drawing instruction) based on the shader bin file. The shader module sends the image rendering instruction stream to the GPU driver. The GPU driver generates a rendering driver instruction stream based on the image rendering instruction stream, and sends the rendering driver instruction stream to the GPU. The GPU indicates, based on the rendering driver instruction stream, the display driver to transmit a frame to the display, to implement rendering of a game image.

It should be noted that the software architecture of the electronic device 100 is not limited to the software and hardware system structures shown in FIG. 2 to FIG. 4. In actual application, the software and hardware system structures shown in FIG. 2 to FIG. 4 may be transformed based on a specific application scenario. This is not limited in this application.

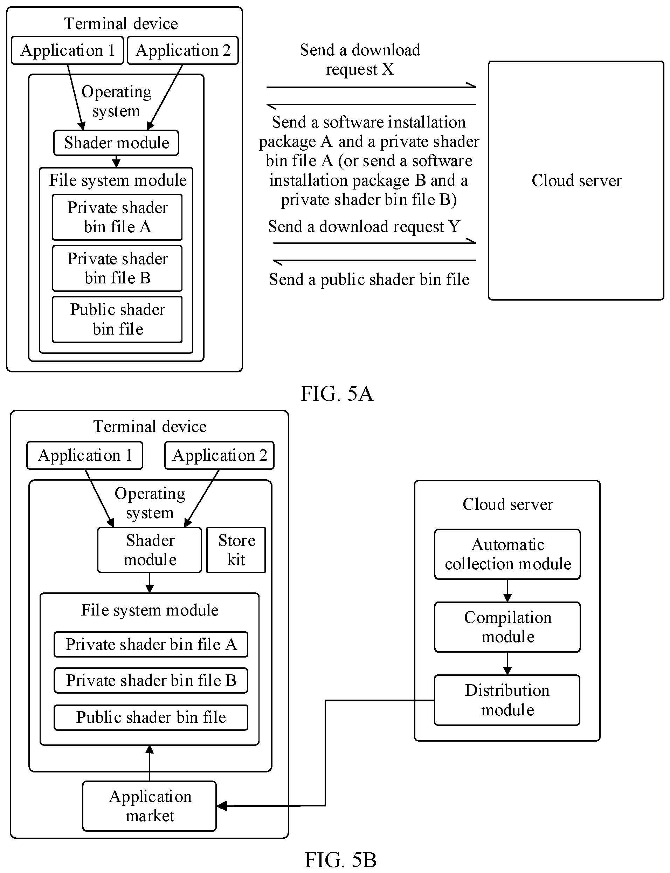

The foregoing describes in detail the software and hardware system structures of the electronic device 100 applicable to this application. The following describes, with reference to FIG. 5A and FIG. 5B, two application scenario architectures applicable to this application.

FIG. 5A shows an application scenario in which a terminal device obtains a public shader bin file (which may also be referred to as public executable code) and a private shader bin file (which may also be referred to as private executable code) from a cloud server. In some scenarios, the terminal device (that is, an example of a second device) may send a download request X to the cloud server (that is, an example of a first device), where the download request X is used to download a software installation package of an application 1 (that is, an example of a first application) (or a software installation package of an application 2). After receiving the download request X, the cloud server sends a software installation package A and a private shader bin file A (or sends a software installation package B and a private shader bin file B) to the terminal device. After receiving the software installation package A and the private shader bin file A (or receiving the software installation package B and the private shader bin file B), the terminal device may store the private shader bin file A (or the private shader bin file B) in the file system module in the OS, so that the shader module invokes the file when performing an image rendering function.

In some other scenarios, the terminal device may further send a download request Y to the cloud server, where the download request Y is used to request to download the public shader bin file. After receiving the download request Y, the cloud server sends the public shader bin file to the terminal device. After receiving the public shader bin file, the terminal device may store the public shader bin file in the foregoing file system module, so that the shader module invokes the public shader bin file when performing an image rendering function.

When the application 1 (or the application 2) invokes the shader module in an image rendering process, the terminal device triggers the shader module located in the operating system to check whether the file system module has a compiled shader bin file (for example, the private shader bin file A). For example, if the shader module detects that the file system module has the compiled shader bin file, the shader module may directly read the public shader bin file and the private shader bin file A from the file system module to perform image rendering (or trigger the shader module to read the public shader bin file and the private shader bin file B from the file system module to perform image rendering), without a need to trigger a compilation action.

FIG. 5B shows an application scenario in which a terminal device (that is, an example of a second device) interacts with a cloud server (that is, an example of a first device). The application scenario is applicable to a software installation scenario (for example, installation and update of an application from an application market, and update of an application not from the application market). In this application scenario, the cloud server and the terminal device may communicate with each other, for example, may send a request message, a software installation package, and the like through a wireless network. The cloud server includes an automatic collection module, a compilation module, and a distribution module. A processing and interaction process of these modules is as follows:
The automatic collection module, which may also be referred to as a collection module, is configured to collect shader source code (for example, L types of shader source code described below) of a plurality of applications from at least one terminal device, and is further configured to send the collected shader source code to the compilation module.

The compilation module is configured to determine public source code and private source code, and separately compile the public source code and the private source code. For example, after receiving the shader source code sent by the automatic collection module, the compilation module determines the public source code and the private source code (for example, M types of private source code) based on the shader source code, and then separately compiles the public source code and the private source code to obtain a public shader bin file (for example, N types of public executable code described below) and a private shader bin file (for example, K types of private executable code described below). For details, refer to the following embodiments. Details are not described herein.

The distribution module is configured to provide a public shader bin file, a software installation package, a corresponding private shader bin file, and the like for the terminal device.

On a terminal side, the terminal device may download, from the cloud server through an application market, a software installation package A of an application 1 (or an application 2), a corresponding private shader bin file A (or a private shader bin file B), and a public shader bin file. The application market is application software installed on the terminal device, and is used to download software installation packages and shader bin files of different applications from the cloud server. After the downloading is completed, the terminal device may invoke a system interface to store the shader bin file (for example, the private shader bin file A, the private shader bin file B, and the public shader bin file) into the file system module. The file system module is a module run in the operating system of the terminal device, and is configured to store the public shader bin file and various private shader bin files.

When the application 1 (or the application 2) invokes the shader module in an image rendering process (or invokes an image rendering interface shader module), the terminal device triggers the shader module to check whether the file system module has a compiled shader bin file (for example, the private shader bin file A). If the file system module has the compiled shader bin file, the shader module may directly invoke the public shader bin file and the private shader bin file (for example, the private shader bin file A or the private shader bin file B) from the file system module to perform image rendering, without a need to trigger a compilation action. If the file system module does not have the compiled shader bin file, the shader module needs to trigger a compilation operation again. The shader module is a module located in the operating system, and is configured to perform an image rendering function. When performing the image rendering function, the shader module usually preferentially uses the compiled shader bin file in the file system module. A compilation operation is triggered only when the file system module has no compiled shader bin file. In addition, the operating system further includes a store kit (store kit), where the store kit is configured to provide a software distribution related interface, and is configured to start the application market to perform application update (for details, refer to the following embodiments, and details are not described herein).

The foregoing describes several application scenarios applicable to this application. The following describes the compilation method provided in embodiments of this application by using examples with reference to the accompanying drawings.

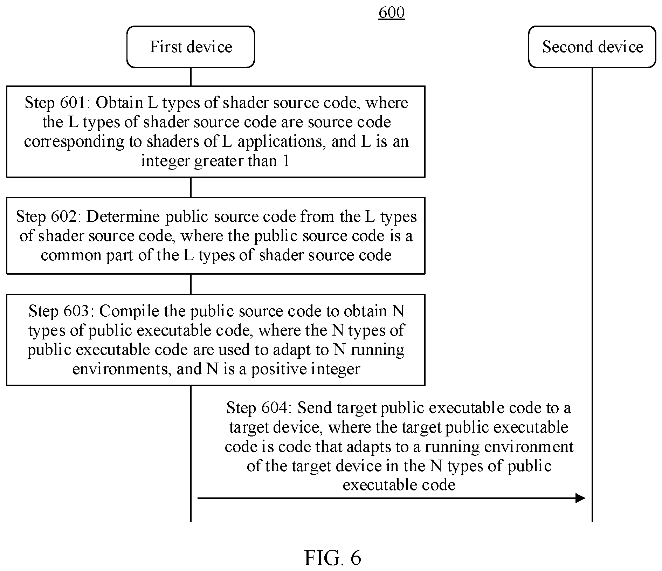

FIG. 6 is a schematic flowchart of a compilation method 600 according to an embodiment of this application. Before the method 600 provided in this application is described, an execution body in this embodiment of this application is first briefly described. In this application, the first device may be a server, and the second device may be a terminal device. The compilation method may be implemented by the first device (or the second device), or may be implemented by a module (for example, a processor, a chip, or a chip system) used in the first device (or the second device), or may be implemented by a logical module or software that can implement all or some functions of the first device (or the second device).

The first device may be a server having software and hardware architectures in FIG. 2 and FIG. 3, and the second device may be a terminal device having software and hardware architectures in FIG. 2 and FIG. 3. It should be noted that the first device and the second device may communicate with each other, for example, may communicate with each other through a wireless network.

The method 600 includes step 601 to step 604. The following describes these steps in detail.

Step 601: The first device obtains L types of shader source code, where the L types of shader source code are source code corresponding to shaders of L applications, and L is an integer greater than 1.

The first device usually refers to a server. The server usually has a strong computing capability, and may compile executable code (or an executable instruction) with higher execution efficiency. For example, the server may be a service server, a computing server, or a cloud server. The shader source code usually refers to source code that is written by a developer and that is used to implement image rendering. For example, for some application software (for example, a game application and a video application) that requires image rendering, when writing source code of the application software, the developer needs to write source code for implementing an image rendering function (in other words, needs to write the shader source code).

Because different applications need to implement different image rendering content, shaders of different applications correspond to different source code. For example, L applications may correspond to L types of shader source code.

Manners in which the first device obtains the L types of shader source code are as follows: Manner 1: In some embodiments, the first device obtains the L types of shader source code from at least one terminal device, where the at least one terminal device is configured to run the L applications.

The at least one terminal device includes one or more terminal devices. That the at least one terminal device is configured to run the L applications may be understood as that the L applications are run on one terminal, or the L applications are run on a plurality of terminals.

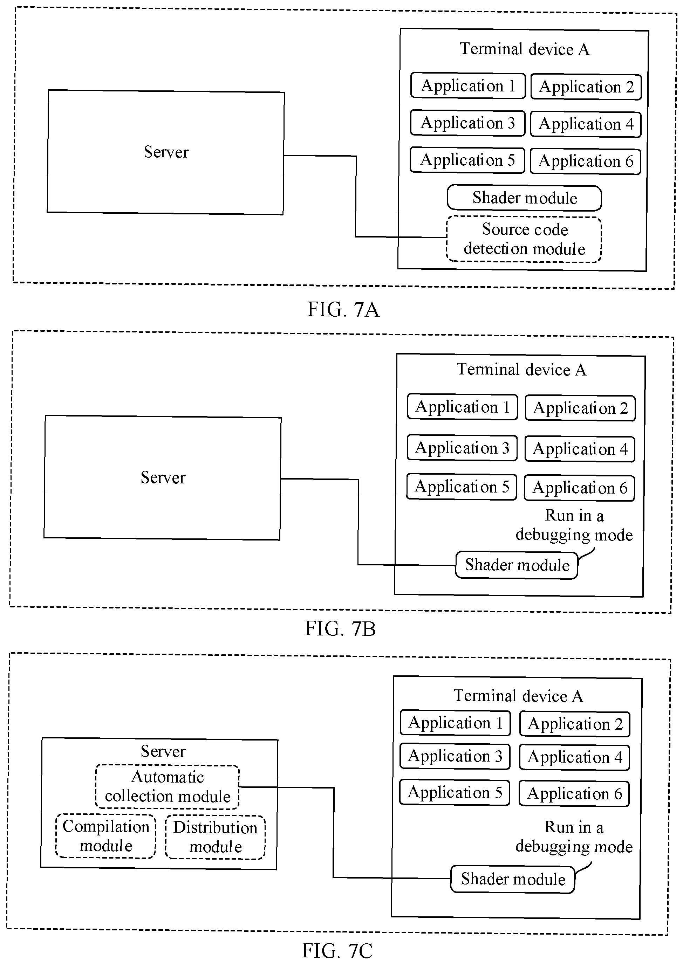

For example, as shown in FIG. 7A, the first device is a server, L=6, and an application 1 to an application 6 are run on a terminal device A. The server and the terminal device A may communicate with each other. The terminal device A includes a shader module and a source code detection module. The shader module is configured to implement image rendering. The source code detection module is configured to obtain shader source code (that is, L=6 types of shader source code) corresponding to each of the application 1 to the application 6 (that is, an example of the L applications). The source code detection module collects the shader source code corresponding to each of the six applications in an image rendering process by the application 1 to the application 6, and sends the six types of shader source code to the server. After receiving the six types of shader source code from the terminal device A, the server processes the six types of shader source code (for example, extracts public source code and private source code), compiles the processed shader source code to obtain executable code (for example, public executable code or private executable code), and finally delivers the executable code to a device (for example, a second device) that has a requirement. In this scenario, because the L applications are run on the terminal device, and the terminal device detects corresponding shader source code in a process in which each application performs image rendering, the first device may obtain the L types of shader source code through the at least one terminal device.

Manner 2: In some embodiments, the first device obtains the L types of shader source code from a shader of at least one terminal device, where a running mode of the shader is a debugging mode. It should be noted that, the terminal device A does not need to be designed with a dedicated source code detection module to obtain shader source code corresponding to each of an application 1 to an application 6. For example, as shown in FIG. 7B, when the shader module is in the debugging mode, the terminal device A may collect, through the shader module, the shader source code (that is, L=6 types of shader source code) corresponding to each of the application 1 to the application 6, and send the six types of shader source code to the server. The shader source code is obtained through the existing shader module, without a need to design a dedicated source code detection module, so that costs of obtaining the source code can be reduced.

For another example, as shown in FIG. 7C, the first device is a server, L=6, and an application 1 to an application 6 are run on a terminal device A. The server and the terminal device A may communicate with each other. The terminal device A includes a shader module and a source code detection module. The server includes an automatic collection module, a compilation module, and a distribution module. The automatic collection module is configured to automatically obtain the L types of shader source code. The compilation module is configured to compile the shader source code to obtain executable code. The distribution module is configured to send the executable code to the second device (for example, a terminal). On a terminal side, during running of the application 1 to the application 6, the source code detection module may collect shader source code corresponding to each of the six applications in an image rendering process, and send the six types of shader source code to the server. On a server side, the automatic collection module may receive six types of shader source code from the terminal device A, and send the six types of shader source code to the compilation module. The compilation module processes the six types of shader source code (for example, extracts public source code and private source code), and compiles the processed shader source code to obtain executable code (for example, public executable code or private executable code). The compilation module sends the executable code to the distribution module. The distribution module delivers the executable code to a target terminal.

It should be noted that, in the foregoing Manner 1 and Manner 2, only a manner in which the first device obtains the L types of shader source code from one terminal device is used as an example. For a manner in which the first device obtains the L types of shader source code from a plurality of terminal devices in Manner 1 and Manner 2, refer to Manner 3 and Manner 4 that are to be described below. Principles of the manners are similar, and details are not described herein again by using examples.

Manner 3: In some embodiments, the first device includes a collection module, the collection module is configured to obtain shader source code. That the first device obtains the L types of shader source code from the at least one terminal device includes: The first device obtains the L types of shader source code from the at least one terminal device using the collection module. The collection module is a module that is configured to obtain shader source code and that is on the first device. The collection module may be a module in an operating system, or may be a module at an application layer. This is not limited in this application.

It should be noted that, in some scenarios, the collection module may also be referred to as an automatic collection module, an autonomous collection module, a source code collection module, or the like. A name of the collection module in actual application is not limited in this application. For example, as shown in FIG. 8A, the first device is a server, and a terminal device 1 to a terminal device n are n physical terminal devices (for example, the terminal device 1 is a watch, the terminal device 2 is a mobile phone, ..., and the terminal device n is a tablet). The server may communicate with the n terminal devices. An application 1 to an application m (that is, an example of the L applications) are run on the n terminal devices (that is, an example of the at least one terminal device). For example, the application 1 and the application 2 are run on the terminal device 1, the application 3 is run on the terminal device 2, ..., and the application m is run on the terminal n. Each of the terminal device 1 to the terminal device n includes a shader module and a source code detection module. The shader module is configured to implement image rendering. The source code detection module is configured to obtain shader source code (that is, an example of the L types of shader source code) corresponding to each of the application 1 to the application m. The server includes an automatic collection module, a compilation module, and a distribution module. For understanding of the modules, refer to the server shown in FIG. 7C. Details are not described herein again. On a terminal side, during running of the application 1 to the application m, the source code detection module may collect shader source code (that is, L=m types of shader source code) corresponding to each of the m applications in an image rendering process, and send the m types of shader source code to the server. On a server side, the automatic collection module may receive the m types of shader source code from the terminal device 1 to the terminal device n (for example, receive, from the terminal device 1, shader source code corresponding to the application 1 and shader source code corresponding to the application 2), and send the m types of shader source code to the compilation module. The compilation module processes the m types of shader source code (for example, extracts public source code and private source code), and compiles the processed shader source code, to obtain executable code (for example, public executable code or private executable code). The compilation module may send the executable code to the distribution module. The distribution module delivers the executable code to a device that has a requirement. It can be learned that, in comparison with manual collection of the L types of shader source code, it is simple, efficient, and low-cost that the first device automatically obtains the L types of shader source code from the at least one terminal device using the collection module.

Manner 4: In some embodiments, the first device includes a collection module, the collection module is configured to obtain shader source code. That the first device obtains the L types of shader source code from the shader of the at least one terminal device includes: The first device obtains the L types of shader source code from the shader of the at least one terminal device using the collection module, where the running mode of the shader is the debugging mode.

In some scenarios, a developer does not need to design a dedicated source code detection module on a terminal device 1 to a terminal device n to obtain shader source code corresponding to different applications. For example, as shown in FIG. 8B, after setting respective shader modules of the terminal device 1 to the terminal device n to the debugging mode, the terminal device 1 to the terminal device n may collect shader source code corresponding to m applications (for example, an application 1 to an application m) run in operating systems of the terminal device 1 to the terminal device n through the respective shader modules, to finally obtain m types of shader source code. The cloud server may obtain the m types of shader source code from the terminal device 1 to the terminal device n, without a need to manually collect the m types of shader source code or design a dedicated source code detection module. This source code obtaining manner is efficient and convenient, and has low costs.

For another example, as shown in FIG. 8B, the first device may be a cloud server, and a terminal device 1 to a terminal device n are n virtual terminals on the cloud server. The cloud server may obtain, from the n virtual terminals through an automatic collection module, shader source code corresponding to applications run on the virtual terminals. Each of the terminal device 1 to the terminal device n includes a shader module. The cloud server includes an automatic collection module, a compilation module, and a distribution module. On a terminal side, a shader module of each virtual terminal runs in a debugging mode, and may be configured to obtain shader source code. For example, the shader module of each virtual terminal may collect shader source code corresponding to each application in an image rendering process of each application, and send the shader source code to the cloud server. On a cloud server side, the automatic collection module may receive the m types of shader source code from the n virtual terminals (for example, receive shader source code corresponding to the application 1 from the terminal device 1, and receive shader source code corresponding to the application 2 from the terminal device 2), and send the m types of shader source code to the compilation module. The compilation module processes the m types of shader source code (for example, extracts public source code and private source code), and compiles the processed shader source code, to obtain executable code (for example, public executable code or private executable code). The compilation module may send the executable code to the distribution module. The distribution module may deliver the executable code to a terminal that has a requirement.

Step 602: The first device determines public source code from the L types of shader source code, where the public source code is a common part of the L types of shader source code.

The L types of shader source code correspond to the L applications, and which part of source code in each type of shader source code may be used as the public source code may be determined based on a degree of wide use of an application corresponding to the shader source code, and the degree of wide use may be measured based on some use frequency information and an invoking situation. For example, a probability that shader source code corresponding to an application that is frequently used is determined as the public source code is high, and a probability that shader source code corresponding to an application that is not frequently used is determined as the public source code is low. For another example, if specific shader source code is invoked by more applications, it indicates that the shader source code is more widely used, and a probability that the shader source code is determined as the public source code is high. If specific shader source code is invoked by fewer applications, it indicates that the shader source code is less widely used, and a probability that the shader source code is determined as the public source code is low.

The use frequency information indicates a frequency at which each of the L applications is used. The use frequency information includes but is not limited to a quantity of downloads (which may also be referred to as a download quantity) and/or a quantity of installations (which may also be referred to as an installation quantity). A larger quantity of downloads (or installations) indicates a higher frequency at which the application is used, and a smaller quantity of downloads (or installations) indicates a lower frequency at which the application is used. The invoking situation may be a case in which specific shader source code is invoked by another application, for example, a quantity of applications that invoke a first type of shader source code (that is, an example of the L types of shader source code) or a total quantity of times that the first type of shader source code is invoked by another application.

In some embodiments, that the first device determines the public source code from the L types of shader source code includes: determining the public source code from the L types of shader source code based on the first parameter, where the first parameter includes the use frequency information. For example, the use frequency information is a quantity of downloads, and there are L=4 types of shader source code. A quantity of downloads of an application 1 corresponding to a first type of shader source code is 100 million, a quantity of downloads of an application 2 corresponding to a second type of shader source code is 80 million, a quantity of downloads of an application 3 corresponding to a third type of shader source code is 250 million, and a quantity of downloads of an application 4 corresponding to a fourth type of shader source code is 4 million. It is clear that the application 1 and the application 3 are used by a largest quantity of users, the application 2 is used by a second largest quantity of users, and the application 4 is used by a smallest quantity of users. In this case, when the first device determines public source code from the four types of shader source code, there is a high probability that shader source code shared by the first type of shader source code and the third type of shader source code is determined as the public source code. For example, both the first type of shader source code and the third type of shader source code include shader source code A, but do not include shader source code B and shader source code C. The second type of shader source code includes the shader source code B, and the fourth type of shader source code includes the shader source code C. Considering that the application 1 and the application 3 are mostly used by users, the first device may use the shader source code A as the public source code.

It can be learned that, to ensure that the public source code determined from the L types of shader source code is extensive, in this application, shader source code that is frequently invoked (or used) is selected from the L types of shader source code based on the first parameter (for example, the use frequency information) as the public source code, so that the public executable code obtained by compiling the public source code subsequently can be invoked by a plurality of applications, and a probability of frame loss and frame freezing in the image rendering process in more applications is further reduced

For another example, in some other embodiments, the first device may determine the public source code from the L types of shader source code based on an invoker situation. For another example, there are L=4 types of shader source code. A first type of shader source code is from an application 1, ..., and a fourth type of shader source code is from an application 4. The first type of shader source code includes shader source code A1, shader source code B1, and shader source code C1. The second type of shader source code includes the shader source code A1, shader source code B2, and the shader source code C1. The third type of shader source code includes the shader source code A1, shader source code B3, and the shader source code C1. The fourth type of shader source code includes shader source code A2, shader source code B4, and the shader source code C1. It is clear that the application 1 to the application 3 all invoke the shader source code A1. It indicates that the shader source code A1 may be widely used. In addition, the application 1 to the application 4 also invoke the shader source code C1. It indicates that the shader source code C1 may be widely used. However, the shader source code B1 to the shader source code B4 are not invoked by another application other than the application of respective shader source code. It indicates that the shader source code B1 to the shader source code B4 may be private source code of the application. The shader source code A1 and the shader source code C1 are more likely to be determined as the public source code than the shader source code B1 to the shader source code B4. Because the shader source code A1 and the shader source code C1 may be invoked by more applications, the first device may use the shader source code A1 and the shader source code C1 as the public source code.

Step 603: The first device compiles the public source code to obtain N types of public executable code, where the N types of public executable code are used to adapt to N running environments, and N is a positive integer.

Because the source code needs to be compiled when being run on the terminal device (that is, an example of the second device), after determining the public source code, the first device may compile the public source code.

In addition, because device parameters of the terminal device are different, the executable code obtained by compiling the source code is different. Therefore, in some embodiments, the first device may compile, based on different device parameters, the public source code into executable code that adapts to different device running environments. The device parameter may include but is not limited to at least one of a device type (for example, a mobile phone, a tablet, or a watch), a GPU version number, or an OS version number. The GPU version number may also be referred to as a GPU model or a GPU version. For example, the GPU version number is XXX 000. The operating system version number may also be referred to as an operating system model or an operating system version. For example, the operating system version number is XX01.

The foregoing N may be generally determined based on the device parameter. For example, if there are currently five GPU version numbers, the first device may compile, based on different GPU version numbers, the public source code into public executable code that can be run in the five different GPU versions. For another example, if there are currently five GPU version numbers and four OS version numbers, the first device may compile, based on different GPU version numbers and OS version numbers, the public source code into public executable code that can be run in 20 (that is, 5×4=20) different GPU versions and OS versions.

In some embodiments, that the first device compiles the public source code includes: compiling the public source code based on the second parameter, where the second parameter includes at least one of the GPU version number or the OS version number.

The second parameter is an example of the foregoing device parameter. For example, the second parameter is a GPU version number. If there are three GPU version numbers in a current market: a version 1, a version 2, and a version 3, the first device may compile the public source code into N=3 types of public executable code based on the version 1 to the version 3: public executable code 1, public executable code 2, and public executable code 3. The three types of public executable code may be run in three GPU versions (that is, adapt to running environments of three GPU versions). For example, if a version number of a GPU installed on the second device is a version 1 (or a version 2 or a version 3), the public executable code 1 (or the public executable code 2 or the public executable code 3) may be run on the GPU of the second device.

For another example, the second parameter is a GPU version number and an operating system version number. If there are two GPU version numbers in a current market: a GPU version 1 and a GPU version 2, and two OS version numbers: an OS version 1 and an OS version 2, the first device may compile the public source code into N=4 types of public executable code based on the two GPU version numbers and the two OS version numbers: public executable code 1, public executable code 2, public executable code 3, and public executable code 4. The public executable code 1 adapts to a running environment established based on the GPU version 1 and the OS version 1, the public executable code 2 adapts to a running environment established based on the GPU version 1 and the OS version 2, the public executable code 3 adapts to a running environment established based on the GPU version 2 and the OS version 1, and the public executable code 4 adapts to a running environment established based on the GPU version 2 and the OS version 2. The four types of public executable code may be run in four different running environments established based on GPU versions and OS versions. For example, if the GPU version installed on the second device is the version 1 and the OS version number is the OS version 1, the public executable code 1 may be run on a GPU and an OS of the second device.

Because different GPU version numbers and/or OS version numbers may be used to establish different running environments, the first device may compile, based on the GPU version number and/or the OS version number, the public source code into public executable code that can adapt to different running environments, to meet requirements for the public executable code in different running environments.

Step 604: The first device sends target public executable code to a second device, where the target public executable code is code that adapts to a running environment of the second device in the N types of public executable code.

The second device may be a terminal device, or may be a target service server. This is not limited in this application.

Because version numbers of GPUs and version numbers of OSs that are carried on different devices may be different, target public executable code that needs to be downloaded by the different devices from the first device may be different. For example, the second device sends a request 1 (for example, first request information described below) to the first device, where the request 1 includes the GPU version number and the OS version number of the second device. After receiving the request 1, the first device may determine, from the N types of public executable code based on the GPU version number and the OS version number in the request 1, the public executable code 1 that adapts to the running environment of the second device, and send the public executable code 1 to the second device. After receiving the public executable code 1, the terminal device may store the public executable code 1 in a local file system module. When the application 1 performs a rendering function, the shader module of the second device may directly read (or invoke) the public executable code 1 from the file system module, without a need to compile the public source code, so that a compilation amount in the image rendering process is reduced.

In conclusion, in the image rendering process, one processing method is to perform rendering while compiling, and this method often causes frame loss and frame freezing. In this application, the first device may determine the public source code from the L types of shader source code, compile the public source code, and finally send, to the second device, the target public executable code that adapts to the running environment of the second device. When performing a rendering operation, the second device may directly invoke the public executable code, without a need to compile the public source code part, so that a compilation amount in the image rendering process is reduced, a probability of frame loss and frame freezing in the image rendering process is reduced, and image rendering performance is optimized.

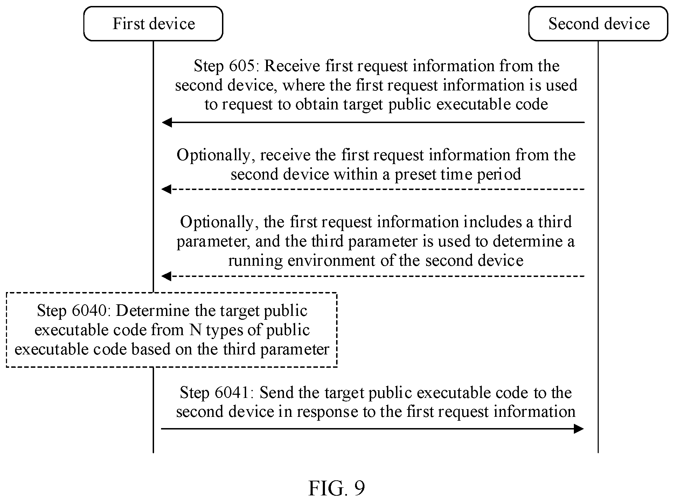

As shown in FIG. 9, before step 604, the method 600 further includes step 605.

Step 605: The first device receives first request information from the second device, where the first request information is used to request to obtain the target public executable code. Correspondingly, the second device sends the first request information to the first device.

The first request information includes but is not limited to a second device identifier and a second device parameter. The second device identifier may be a string of characters (for example, XXX0002) used to uniquely identify the second device. The second device parameter includes but is not limited to a GPU version number and/or an OS version number.

Because the N types of public executable code on the first device correspond to different running environments, the first device needs to determine the target public executable code from the N types of public executable code based on the second device parameter reported by the second device. For example, the second device parameter includes a GPU version number A and an operating system version number B. If the public executable code 1 is the public executable code obtained by the first device by compiling the public source code based on the version number A and the version number B, the first device may determine, from the N types of public executable code based on the version number A and the version number B, that the public executable code 1 is the target public executable code.

In some embodiments, step 604 may be further implemented through step 6041.

Step 6041: The first device sends the target public executable code to the second device in response to the first request information.

After receiving the first request information, the first device may determine the target public executable code based on the first request information, and deliver the target public executable code to the second device, to avoid forcibly delivering data and affecting user experience when the user does not have a requirement.

Optionally, the second device may send the first request information within a preset time period. Correspondingly, the first device may receive the first request information from the second device within the preset time period.

The preset time period may be set based on a start moment and an interval. For example, the second device sends request information (for example, the first request information) to the first device once at an interval T starting from a moment T1. Correspondingly, the first device receives the request information from the second device once at the interval T starting from the moment T1.

For example, in some scheduled task (or periodic task) scenarios, the second device may periodically send the first request information to the first device, to obtain the target public executable code from the first device, to ensure that currently stored public executable code is consistent with currently latest public executable code of the first device.

In these embodiments, the second device may send the first request information to the first device, to obtain the target public executable code from the first device. In this way, the second device may directly invoke the public executable code during image rendering, without a need to trigger compilation of the public source code, so that a compilation amount of the source code is reduced, a probability of frame loss and frame freezing in an image rendering process is reduced, and image rendering performance is optimized.

In an optional implementation, the first request information includes a third parameter, and the third parameter is used to determine the running environment of the second device. Before step 604, the method 600 further includes step 6040.

Step 6040: The first device determines the target public executable code from the N types of public executable code based on the third parameter.

The third parameter is an example of the device parameter. For example, the third parameter may include a device model, a GPU version number, and an operating system version number. Because the N types of public executable code are executable code compiled by the first device based on the device parameter (for example, the GPU version number), the third parameter reported by the second device to the first device helps the first device determine, from the N types of public executable code based on the third parameter, the target public executable code that adapts to the second device.

In some embodiments, the third parameter includes at least one of a GPU version number of the second device or an OS version number of the second device. The second device may report the GPU version number of the second device and/or the OS version number of the second device to the first device through the first request information, so that the first device determines, from the N types of public executable code based on the GPU version number and/or the OS version number, the target public executable code that adapts to the running environment of the second device, to avoid incorrectly delivering the executable code that does not adapt to the running environment of the device. For details, refer to the determining manner of the target public executable code in step 605. Details are not described herein again.

In some embodiments, in addition to determining the public source code and compiling the public source code, the first device may further determine the private source code and compile the private source code.

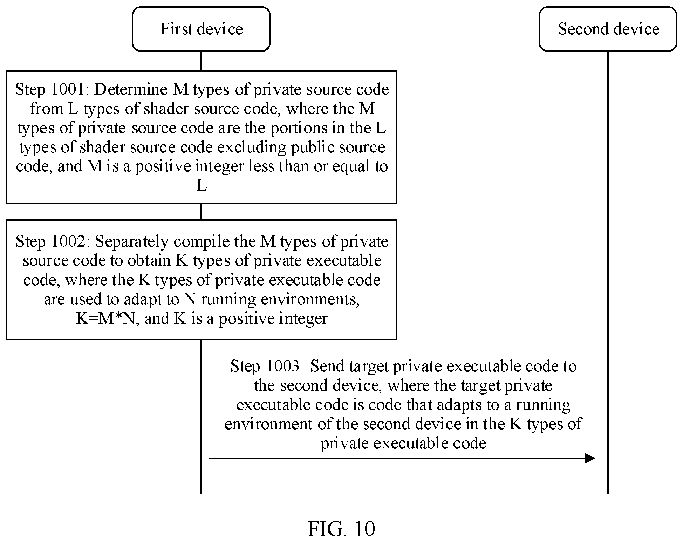

As shown in FIG. 10, the method 600 further includes step 1001 to step 1003.

Step 1001: The first device determines M types of private source code from the L types of shader source code, where the M types of private source code are the portions of the L types of shader source code excluding the public source code, and M is a positive integer less than or equal to L. It should be noted that the M types of private source code are private source code corresponding to M applications. Generally, the M types of private source code are one-to-one bound to the M applications. When the user downloads or updates an application, the private source code is usually delivered to a client (for example, the second device) together with a software installation package of the application.

It can be learned from the foregoing descriptions of step 602 that the first device may determine the public source code from specific shader source code, and the private source code may be understood as the portion in the shader source code excluding the public source code.

In some embodiments, the first device may determine M=L types of private source code from the L types of shader source code. In other words, the first device removes a public source code part from each of the L types of shader source code, to obtain L types of private source code from which the public source code is removed.

In some other embodiments, the first device may determine the M types of private source code from the L types of shader source code based on a first parameter, where the first parameter includes use frequency information, and M is less than L.

For the use frequency information, refer to the related descriptions in step 602. Details are not described herein again. For example, the use frequency information is a quantity of downloads corresponding to each of the L applications. The first device may remove, based on the quantity of downloads of each of the L applications, shader source code corresponding to an application with a small quantity of downloads. For example, downloads of five applications in the L applications are less than a preset value. In this case, the first device may remove, from the L types of shader source code, five types of shader source code corresponding to the five applications, to obtain L-5 types of shader source code. In other words, the first device removes a public source code part from each of the L-5 types of shader source code, to obtain M=L-5 types of private source code from which the public source code is removed, where "-" is a subtraction operator. In this embodiment, the first device removes, from the L types of shader source code based on the first parameter, private source code corresponding to some uncommonly used applications, and reserve the private source code corresponding to the M commonly used applications (that is, the M types of private source code), to ensure that the private executable code obtained by compiling the M types of private source code has high usage.

Step 1002: The first device separately compiles the M types of private source code to obtain K types of private executable code, where the K types of private executable code are used to adapt to the N running environments, K=M*N, and K is a positive integer.

Herein, "*" is a multiplication operator. In K=M*N, "M" represents M types of private source code, and also represents M applications; and "N" represents that each type of private source code may be compiled into N types of private executable code, or may be understood as that each application may correspond to N types of private executable code. N is usually determined by the device parameter (for example, the foregoing second device parameter). For example, if the device parameter includes five GPU version numbers, each type of private source code may be compiled into N=5 types of private executable code, and the five types of private executable code may be run on GPUs corresponding to the five GPU version numbers.

Because the first device compiles each of the M types of private source code in a same manner, the following describes a process in which the first device compiles the M types of private source code by using an example in which the first device compiles only one type of private source code. Because compilation of the private source code is similar to that of the public source code, the first device also needs to compile, based on different device parameters, the private source code into executable code that adapts to different device running environments. For the device parameter, refer to the related descriptions in the foregoing step 603, and details are not described herein again. K may be usually determined based on a device parameter and a quantity of source code. For example, if there are currently five GPU version numbers, the first device may compile one type of private source code into five types of private executable code based on the five GPU version numbers. The five types of private executable code may be run on GPUs corresponding to different GPU versions. For example, there are M types of private source code, and the first device may compile the M types of private source code into K=5*M types of private executable code based on the five GPU version numbers. For another example, if there are currently four GPU version numbers and three OS version numbers, the first device may compile one type of private source code into 12 (that is, 4×3=12) types of private executable code based on different GPU version numbers and OS version numbers. The 12 types of private executable code may be run in 12 running environments established based on GPU versions and OS versions. Because there are M types of private source code, and each type of private source code may be compiled into 12 types of executable code, the first device may compile the M types of private source code into K=12*M types of private executable code based on the four GPU version numbers and the three OS version numbers.

In some embodiments, the first device separately compiles the M types of private source code based on a second parameter, where the second parameter includes at least one of a GPU version number or an OS version number.

The second parameter is an example of the foregoing device parameter. For example, the second parameter is a GPU version number. If there are three GPU version numbers in a current market: a version 1, a version 2, and a version 3, the first device may compile one type of private source code into N=3 types of private executable code based on the version 1 to the version 3: private executable code 1, private executable code 2, and private executable code 3. The three types of private executable code may be run in three GPU versions (that is, adapt to running environments of three GPU versions). For example, if a version number of a GPU installed on the second device is a version 1 (or a version 2 or a version 3), the private executable code 1 (or the private executable code 2 or the private executable code 3) may be run on the GPU of the second device. For example, there are M types of private source code, and the first device may compile the M types of private source code into K=3*M types of private executable code based on the three GPU version numbers. For another example, the second parameter is a GPU version number and an OS version number. If there are two GPU version numbers in a current market: a version V1.0 and a version V2.0, and two OS version numbers: a version OS.1 and a version OS.2, the first device may compile one type of private source code into N=4 types of private executable code based on the two GPU version numbers and the two OS version numbers: private executable code 1, private executable code 2, private executable code 3, and private executable code 4. The private executable code 1 adapts to a running environment established based on the version V1.0 and the version OS.1, the private executable code 2 adapts to a running environment established based on the version V1.0 and the version OS.2, the private executable code 3 adapts to a running environment established based on the version V2.0 and the version OS.1, and the private executable code 4 adapts to a running environment established based on the version V2.0 and the version OS.2. The four types of private executable code may be run in four different running environments established based on GPU versions and OS versions. For example, if the GPU version installed on the second device is the version 1 and the OS version number is the version OS.1, the private executable code 1 may be run on a GPU and an OS of the second device. For example, there are M types of private source code, and the first device may compile the M types of private source code into K=4*M types of private executable code based on two GPU version numbers and two OS version numbers.

In this embodiment, because different GPU version numbers and/or OS version numbers may be used to establish different running environments, to compile the private source code into private executable code that can adapt to a plurality of running environments, the first device may compile the private source code based on a parameter like the GPU version number, to meet requirements for the private executable code in different running environments.

Step 1003: The first device sends target private executable code to the second device, where the target private executable code is code that adapts to the running environment of the second device in the K types of private executable code.

For example, in some scenarios, the user triggers a download operation (or an update operation) of an application on the second device. In this case, the second device needs to send request information to the first device, to request the first device to deliver a software installation package of the application or deliver a download address of the software installation package of the application. After receiving the request information (for example, second request information described below) sent by the second device, the first device may also send, to the second device, target private executable code corresponding to the software installation package of the application while sending the software installation package of the application to the second device, or may send, to the second device, a download address of the target private executable code corresponding to the software installation package of the application while sending the software installation package of the application to the second device, so that the second device obtains the target private executable code based on the download address of the target private executable code. Optionally, after receiving the software installation package and the corresponding target private executable code, the second device may invoke a system interface to store the software installation package and the corresponding target private executable code in the file system module, delete previous private executable code, and release storage space.

In some other scenarios, an application X is installed on the second device, and the first device may periodically send, to the second device, latest private executable code (that is, an example of the target private executable code) corresponding to the application X, to ensure that private executable code of the application X stored in the second device is consistent with latest private executable code in the first device.

In conclusion, in addition to determining the public source code from the L types of shader source code, the first device may further determine the M types of private source code from the L types of shader source code, and compile the M types of private source code to obtain the K types of private executable code; and the first device may send, to the second device, the target private executable code that adapts to the running environment of the second device. In the rendering process, the second device may directly invoke the target public executable code and the target private executable code to perform image rendering, so that complex and time-consuming shader source code compilation is avoided, a probability of frame loss and frame freezing in the image rendering process is further reduced, and image rendering performance is optimized.

Before step 1003, the method 600 further includes step 1004.

Step 1004: The first device receives second request information from the second device, and correspondingly, the second device sends the second request message to the first device, where the second request information is used to request to download a software installation package of a first application, and the first application is one of the L applications.

The second request information includes but is not limited to a first application identifier, a second device identifier, and a second device parameter. The first application identifier may be a string of characters (for example, XXX01), and is used to uniquely identify the first application. The first application identifier may be used to determine a software installation package of the first application and corresponding private executable code. For the second device identifier and the second device parameter, refer to related descriptions of the second device identifier and the second device parameter in step 605. Details are not described herein again.

Because the K types of private executable code are executable code obtained by the first device by compiling the M types of private source code, the first device may determine, from the K types of private executable code based on the first application identifier, the N types of private executable code corresponding to the first application. The N types of private executable code are obtained by the first device through compilation based on the device parameter (for example, the GPU version number). Therefore, the first device may determine, from the N types of private executable code based on the second device parameter (that is, an example of the device parameter), the target private executable code that adapts to the running environment of the second device. The running environment of the second device may be determined based on the second device parameter. For example, the first application corresponds to N=2 types of private executable code. A first type of private executable code is obtained by the first device by compiling private source code of the first application based on a GPU version A, and a second type of private executable code is obtained by the first device by compiling private source code of the first application based on a GPU version B. If the second device parameter is the GPU version A, the first device may determine, from the two types of private executable code based on the GPU version A, the first type of private executable code as the target private executable code.

In some embodiments, step 1003 may be further implemented through step 1005.

Step 1005: The first device sends the software installation package of the first application and the corresponding target private executable code to the second device in response to the second request information.

After receiving the second request information, the first device may determine the target private executable code (for details, refer to the related descriptions in step 1004) and the software installation package of the first application based on the second request information. For example, the first device may obtain the software installation package of the first application and the corresponding target private executable code based on the first application identifier, and send (or deliver) both the target private executable code and the software installation package of the first application to the second device. For another example, the first device may obtain the download address of the software installation package of the first application and the download address of the corresponding target private executable code based on the first application identifier, and send the download addresses to the second device, so that the second device obtains the software installation package of the first application and the corresponding target private executable code based on the download addresses. This manner of delivering the target private executable code and the software installation package of the first application to the second device based on the second request information can avoid forcibly delivering data and affecting user experience when the user does not have a requirement.

In some embodiments, the second request information includes the third parameter and a first application identifier, and the third parameter is used to determine the running environment of the second device. Before step 1005, the method 600 further includes step 1006.

Step 1006: The first device determines the target private executable code from the K types of private executable code based on the third parameter and the first application identifier.

The third parameter is an example of the device parameter, and the third parameter includes at least one of the GPU version number of the second device or the OS version number of the second device. It should be noted that the third parameter may further include another parameter (for example, a device model or device system upgrade time). This is not limited in this application. In some scenarios, the first device may quickly determine the N types of private executable code of the first application from the K types of private executable code based on the first application identifier. The N types of private executable code of the first application are executable code compiled by the first device based on the device parameter (for example, the GPU version number). Therefore, the first device may quickly determine, from the N types of private executable code based on the reported third parameter, the target private executable code (or the download address of the target private executable code) that adapts to the second device. For details, refer to a manner in which the first device determines the target private executable code based on the second device parameter (that is, the third parameter herein) in step 1004. Details are not described herein again. After determining the target private executable code, the first device may directly deliver the target private executable code to the second device, or may deliver the download address of the target private executable code, so that the second device obtains the target private executable code based on the download address.

In a possible implementation, before the second device sends the second request information, the method 600 further includes the following steps.

Step 1007: The second device receives a first operation instruction, where the first operation instruction is used to trigger downloading of the software installation package of the first application.

The first operation instruction may be an operation instruction triggered by the user in an application interface of the second device. The first operation instruction may be an installation instruction or a download instruction, or may be an update instruction. The installation instruction is used to trigger the second device to perform download and installation operations. The download instruction is used to trigger the second device to perform a download operation. The update instruction is used to trigger the second device to perform an update operation.

For example, the first operation instruction may be an operation instruction obtained by the second device from a display interface of the application market, or may be an operation instruction obtained by the second device from a display interface of the first application. The application market may also be referred to as an application store, and is used to provide the user with services such as software download, installation, and update, so that the user can view information like an installed application, a to-be-updated application, and a download history. In addition, the application market also displays details, version description, update content, and the like of the application, to help the user understand changes and new functions of the application.

In some embodiments, step 1007 may be further implemented in the following two manners: Manner 1: The second device receives the first operation instruction from the display interface of the application market, where the application market is run on the second device, and the first operation instruction is the installation instruction or the update instruction.

The first operation instruction is an installation instruction or an update instruction. For example, the user may select, in the application market of the second device, an application that needs to be installed, and trigger an installation operation. In this case, the second device may obtain an installation instruction from the display interface of the application market, and download the software installation package of the first application and the corresponding private executable code from the first device (for example, the server) based on the installation instruction.

For another example, the user may select, in the application market of the second device, an application that needs to be updated, and trigger an update operation. In this case, the second device may obtain an update instruction from the display interface of the application market, and download the software upgrade package (which may also be referred to as a software acceleration package) of the first application and the corresponding private executable code from the first device based on the update instruction.

In Manner 1, the user may trigger the installation instruction or the update instruction in the display interface of the application market based on a requirement of the user, to avoid a case like a large amount of occupied network traffic and extra traffic consumption caused by automatic installation or update of an application.

Manner 2: The second device receives the first operation instruction from the display interface of the first application, where the first operation instruction is the update instruction.

Because the first application is installed on the second device, when the first application needs to be updated to a new version, the user may trigger an update operation in the display interface of the first application. Correspondingly, the second device may receive the update instruction from the display interface of the first application. For example, the user may trigger, on the first application, an update operation of the first application. In this case, the second device may update the first application through the application market, or may update the first application through the server of the first application. When the second device updates the first application through the application market, the application market may obtain the software upgrade package of the first application and the corresponding private executable code from the first device, and store the private executable code in the local file system module. However, when the first application updates the first application through the server of the first application, because the server of the first application does not have the private executable code corresponding to the first application, the second device needs to indicate the application market to download, from the first device, the private executable code corresponding to the first application, so that the second device updates an upgraded private executable code corresponding to the first application in time. It should be noted that when updating the private executable code, the second device may locally delete the private executable code corresponding to the first application before upgrade.

It can be learned from the foregoing example that, the user may trigger the installation instruction or the update instruction in the display interface of the application market based on a requirement of the user, to avoid a case like a large amount of occupied network traffic, extra traffic consumption, and local device frame freezing caused by automatic installation or automatic update of an application.

Step 1008: The second device generates the second request information based on the first operation instruction.

After receiving the first operation instruction, the second device may generate the second request information based on content indicated by the first operation instruction. For descriptions of the second request information, refer to related descriptions in step 1004. Details are not described herein again.

In a possible implementation, before step 1008, the method 600 further includes step 1009.

Step 1009: The second device instructs, based on the first operation instruction, the application market to generate the second request information, where the application market is run on the second device.

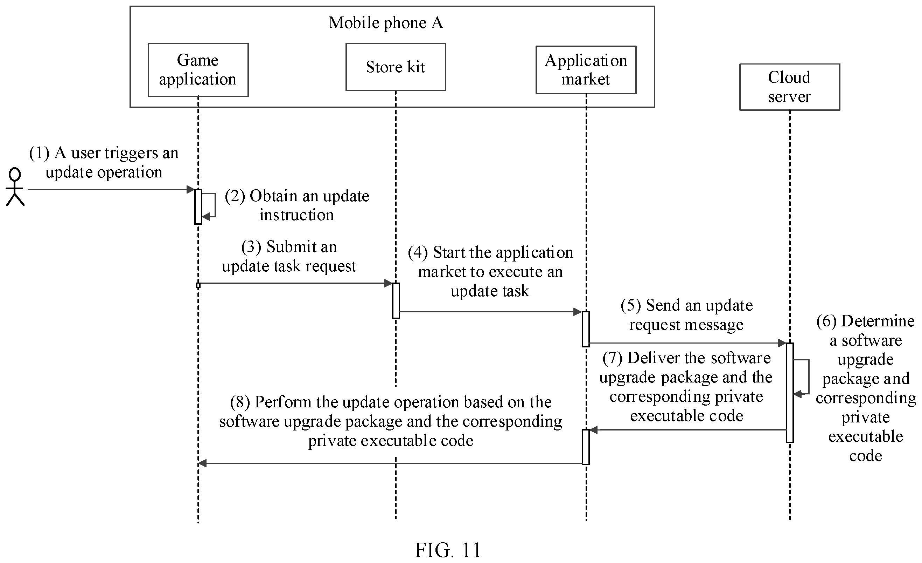

In some scenarios, when the user triggers update in a display interface of an application (for example, the first application), previously stored private executable code may not be updated for an updated application. Therefore, to ensure that the updated application can update the previously stored private executable code in time, when the user triggers the update in the display interface of the application, the second device instructs, based on the first operation instruction, the application market to generate the second request information, to control the application market to update the first application and download the corresponding private executable code, so as to avoid a case in which image rendering performance is affected due to mismatch between the update of the application and the update of the private executable code. It may also be understood that, regardless of whether the user triggers the first operation instruction in the display interface of the first application or triggers the first operation instruction in the display interface of the application market, the second device starts the application market to perform an operation (for example, the installation operation, the update operation, or the download operation) specified in the first operation instruction. When the second device starts the application market, the application market generates the second request information based on the first operation instruction, to download or update the application (for example, the first application) through the application market. The application market manages installation or update of each piece of application software on the second device, so that it can be ensured that the application market obtains corresponding target private executable code from the first device for a downloaded or updated application in time. The following specifically describes, with reference to FIG. 11, a procedure in which the second device starts the application market to perform the update operation. It should be noted that, in FIG. 11, the second device is a mobile phone A (that is, an example of the second device). The mobile phone A includes a store kit (store kit) located in an operating system. The store kit is a bridge between each application (for example, a game application) and the application market, and is responsible for information exchange between the application and the application market. The second device may obtain a first operation instruction through the store kit, and perform an operation like update by starting the application market through the store kit. The first application is a game application, and the game application and the application market are run in the operating system of the mobile phone A. A procedure in which the mobile phone A starts the application market to perform the update operation is as follows:
(1) The user triggers the update operation. After starting the game application, the user may trigger the update operation in a display interface of the game application. For example, the user may tap an "update or upgrade" button in the display interface of the game application to trigger the second device to perform the update operation.
(2) The game application obtains the update instruction (that is, an example of the first operation instruction). After the user triggers the update operation, the game application obtains, from the display interface, the update instruction corresponding to the update operation.
(3) The game application submits an update task request. After obtaining the update instruction, the game application sends the update task request to an application update detection (checkAppUpdate) interface of the store kit.
(4) The store kit starts the application market to execute an update task. After receiving the update task request through the application update detection interface, the store kit sends an update task instruction to the application market, to instruct the application market to execute the update task of the game application.
(5) The application market sends an update request message. After receiving the update task instruction, the application market sends the update request message (that is, an example of the second request information) to the cloud server. The update request message includes but is not limited to a game application identifier (that is, an example of the first application identifier) and a GPU version number (and/or an OS version number).
(6) The cloud server determines a software upgrade package and corresponding private executable code. After receiving the update request message, the cloud server determines, from software upgrade packages of a plurality of applications based on the game application identifier, the software upgrade package corresponding to the game application. In addition, the cloud server determines, from M types of private executable code based on the game application identifier, N types of private executable code corresponding to the game application, and determines, from the N types of private executable code based on the GPU version number (and/or the OS version number), the private executable code (that is, an example of the target executable code) that adapts to the mobile phone A.
(7) The cloud server delivers the software upgrade package and the corresponding private executable code. After determining the software upgrade package and the corresponding private executable code of the game application, the cloud server delivers the software upgrade package and the corresponding private executable code to the application market.
(8) The application market performs the update operation based on the software upgrade package and the corresponding private executable code. After receiving the software upgrade package and the corresponding private executable code, the application market performs the update operation on the current game application based on the software upgrade package. In other words, the application market automatically installs the software upgrade package. In addition, the application market updates the private executable code delivered by the cloud server to a file system module of the mobile phone A, and deletes private executable code of an old version that is previously stored in the file system module.

The foregoing describes the method 600 in detail. With reference to an interface embodiment, the following briefly describes applications of the method 600 in different application scenarios by using an example in which the first device is a cloud server and the second device is a mobile phone.

### Embodiment 1: Application installation scenario

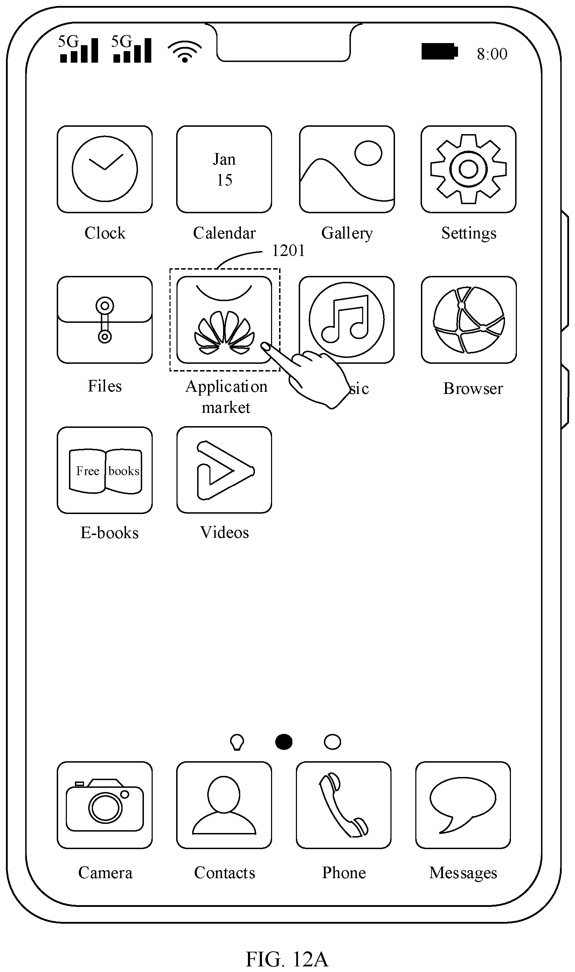

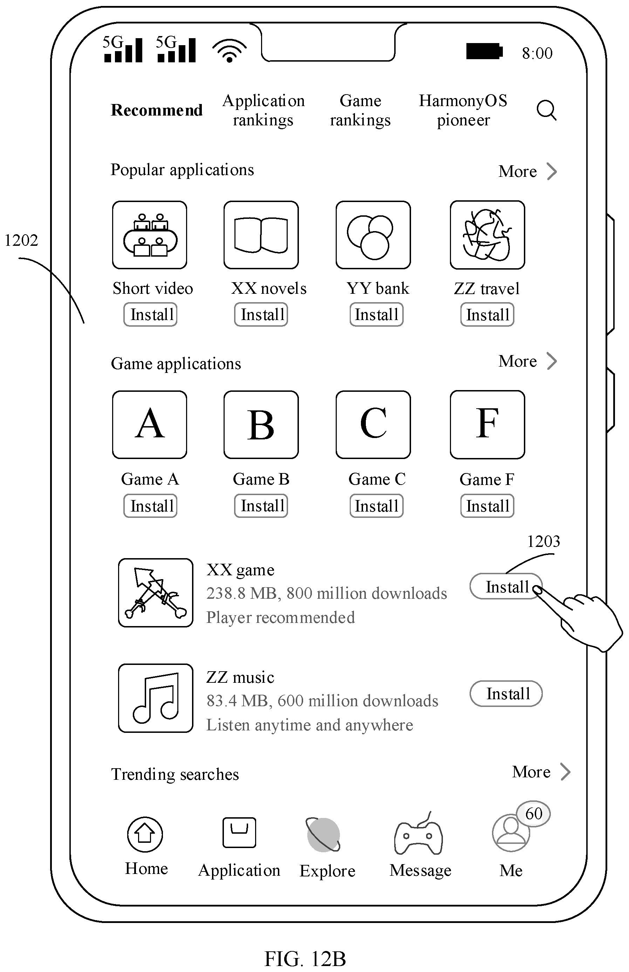

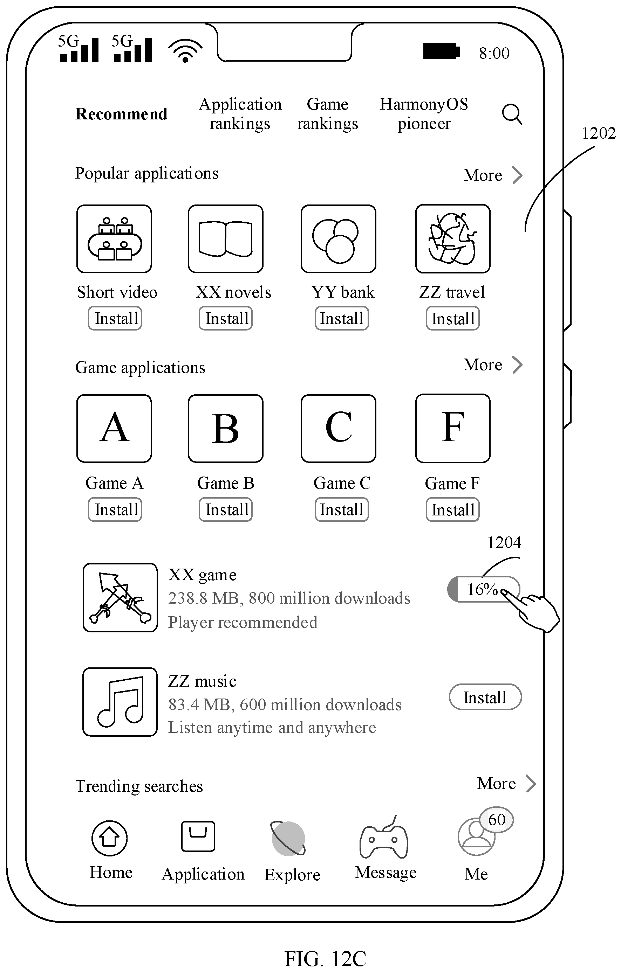

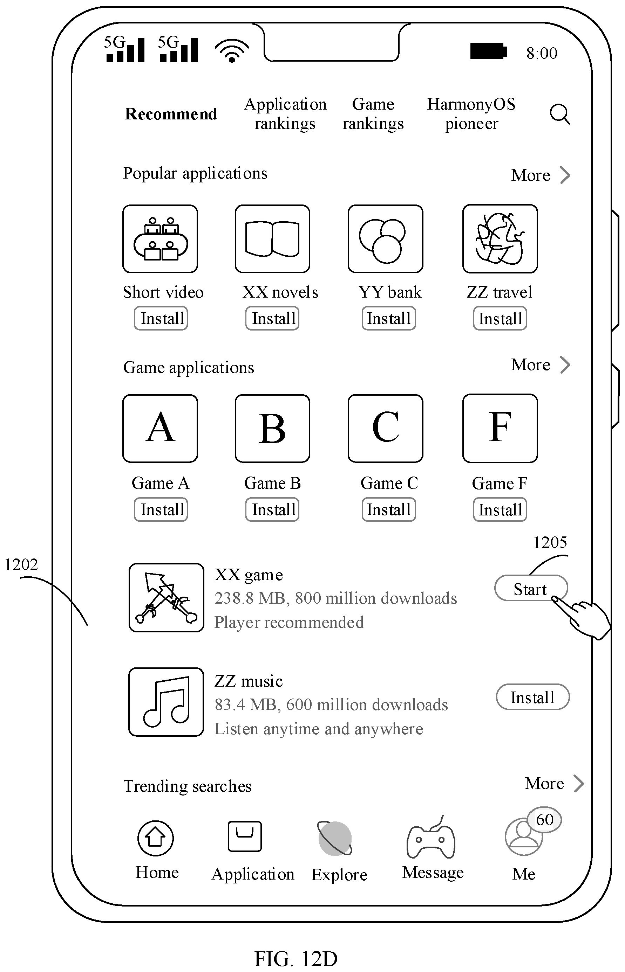

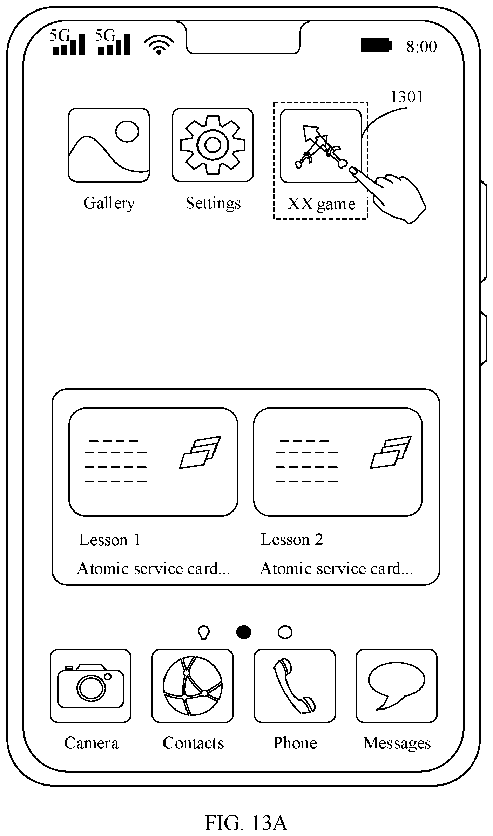

In some embodiments, a user may install, from an application market, an application that needs to be used. For example, the user installs an XX game application (that is, an example of the first application) from an application market. As shown in FIG. 12A, applications such as a video, an application market, and a browser are installed on a mobile phone. The user may double-tap a shortcut icon 1201 of the application market in a main interface of the mobile phone. In this case, the mobile phone enters a recommendation interface 1202 of the application market, and the user may tap an installation button 1203 of the XX game in the recommendation interface 1202, to trigger an installation operation of the XX game, as shown in FIG. 12B. After receiving, from the recommendation interface 1202, an installation instruction (that is, an example of the first operation instruction) corresponding to the installation operation, the mobile phone responds to the installation instruction, obtains a software installation package of the XX game from the cloud server (that is, an example of the first device), and performs download and installation operations. For details, refer to related descriptions in the foregoing Manner 1. In addition, the user may see a download status 1204 of the XX game in a download process, as shown in FIG. 12C. After the software installation package of the XX game is downloaded from the application market, the software installation package is automatically installed. After the installation is completed, a state of the XX game in the recommendation interface 1202 changes to a start state 1205, and the user may start the XX application by tapping a start state 1205 button, as shown in FIG. 12D. In addition, after the installation is completed, as shown in FIG. 13A, a shortcut icon 1301 of the XX game is generated in the main interface of the mobile phone, and the user may start the XX application by double-tapping the shortcut icon 1301.

### Embodiment 2: Application side update scenario

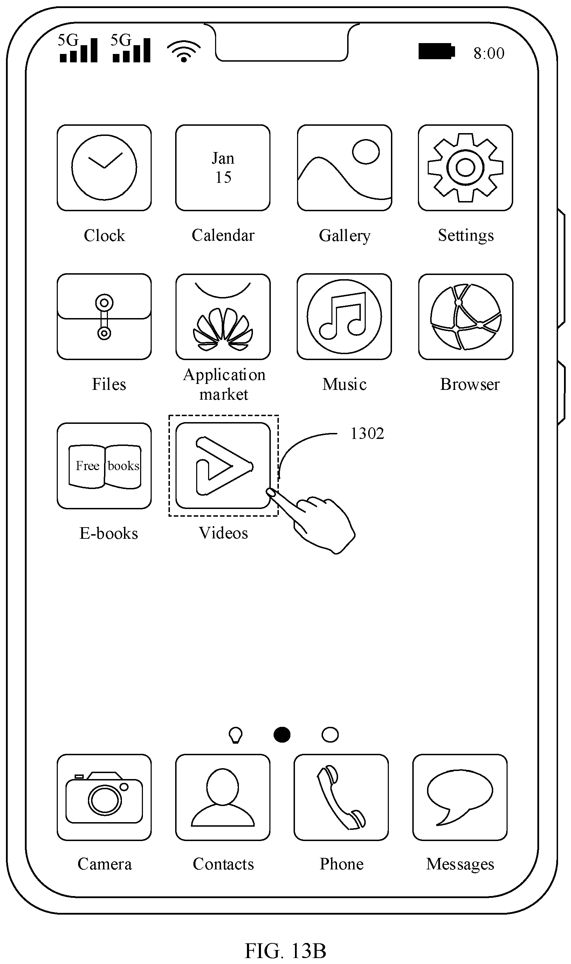

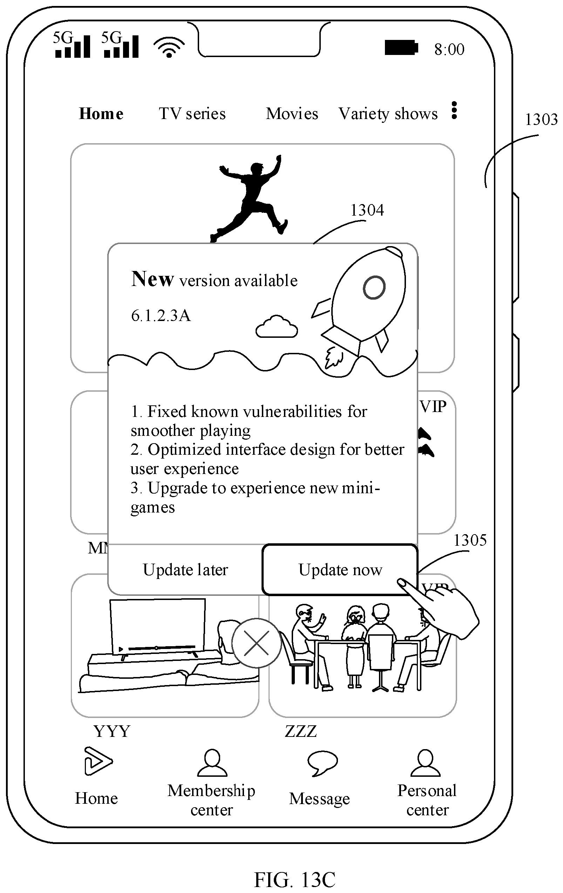

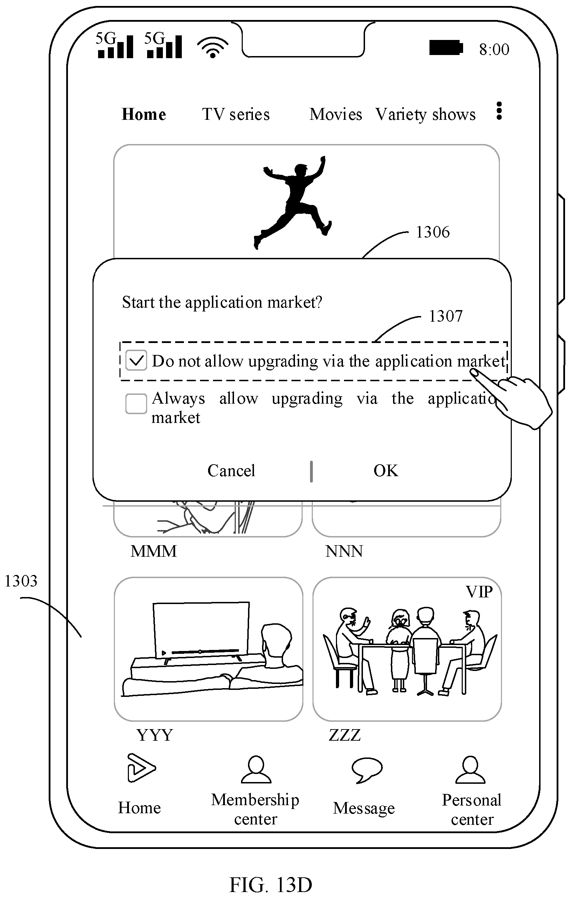

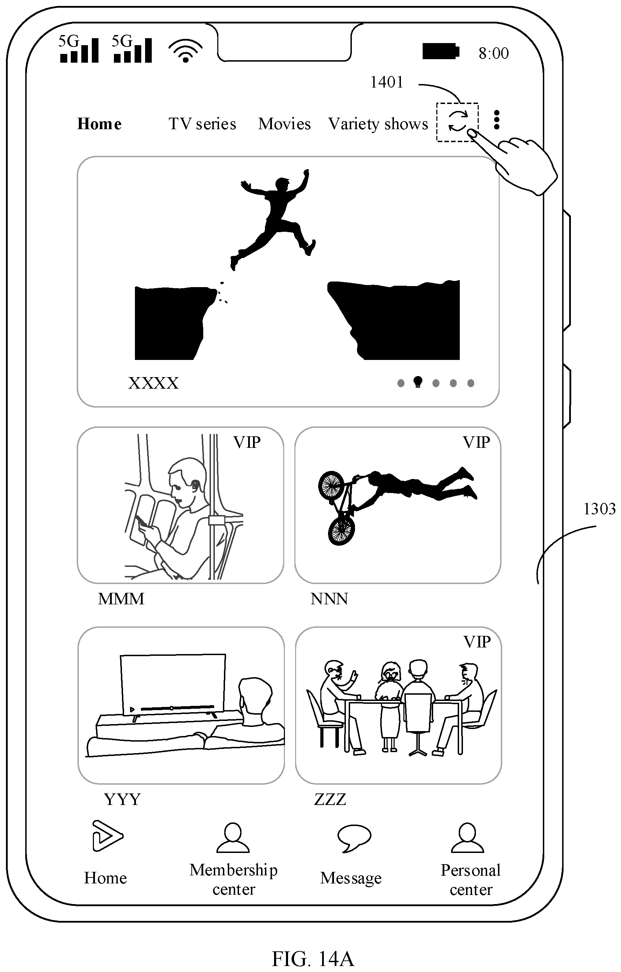

In some embodiments, a user may trigger application update on an application side. For example, the user triggers self-update of a video application (that is, an example of the first application). As shown in FIG. 13B, the user may double-tap a shortcut icon 1302 of the video application in a main interface of a mobile phone. In this case, the mobile phone enters a user interface 1303 of the video application, and the user may select a video to be watched in the user interface 1303. When a new version of the video application is released, the video application may generate an update reminder message in the user interface 1303. For example, as shown in FIG. 13C, when the new version of the video application is released, the video application may generate an update reminder interface 1304 in the user interface 1303. The user may select an "Update now 1305" option in the update reminder interface 1304, to trigger the video application to perform self-update. In this case, an upgrade setting interface 1306 is generated in the user interface 1303, as shown in FIG. 13D. It should be noted that, the video application may perform self-update in two manners. In a first manner, the video application may perform self-update through a server of the video application. In a second manner, the video application may perform self-update through an application market. In the first manner, as shown in FIG. 13D, the user may select a "Do not allow upgrading via the application market 1307" option in the upgrade setting interface 1306. In this case, the video application performs self-update in the background. In other words, the video application downloads a software upgrade package from the application server of the video application, and automatically installs the software upgrade package. In this case, the user may see, in the user interface 1303, a status identifier 1401 that indicates update is in process in the background, as shown in FIG. 14A. Because the server of the application (for example, the video application) does not have private executable code corresponding to a new version (for example, a video application of a 6.1.2.3A version) of the application, in an application-side self-update case, the application market needs to monitor an update status of each application, to update private executable code previously stored in each application in time.

For example, when the application market detects that the video application is updated, the application market may download, from a cloud server (that is, an example of the first device), private executable code corresponding to the new version of the video application. Specifically, the application market may send a request message X to the cloud server, where the request message X is used to request the cloud server to deliver the private executable code corresponding to the new version of the video application, and the request message X includes but is not limited to a video application identifier and a device parameter (for example, a GPU version number and/or an OS version number) of the mobile phone. The cloud server may determine, based on the video application identifier (that is, an example of the first application identifier) and the device parameter (that is, an example of the third parameter) of the mobile phone, the private executable code (that is, an example of the target private executable code) corresponding to the video application or a download address of the private executable code. For details, refer to related descriptions of step 1006. Details are not described herein again.

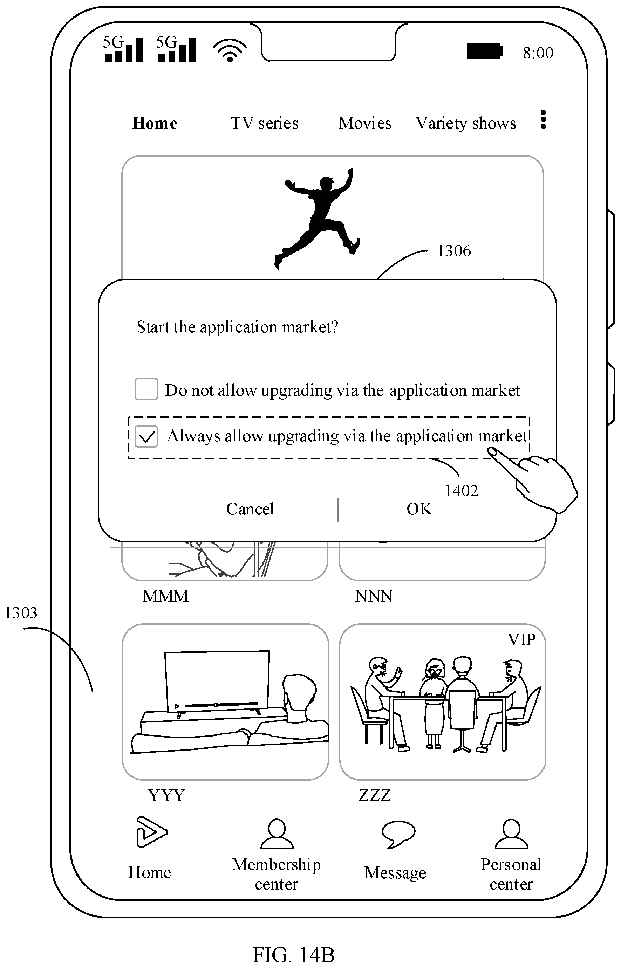

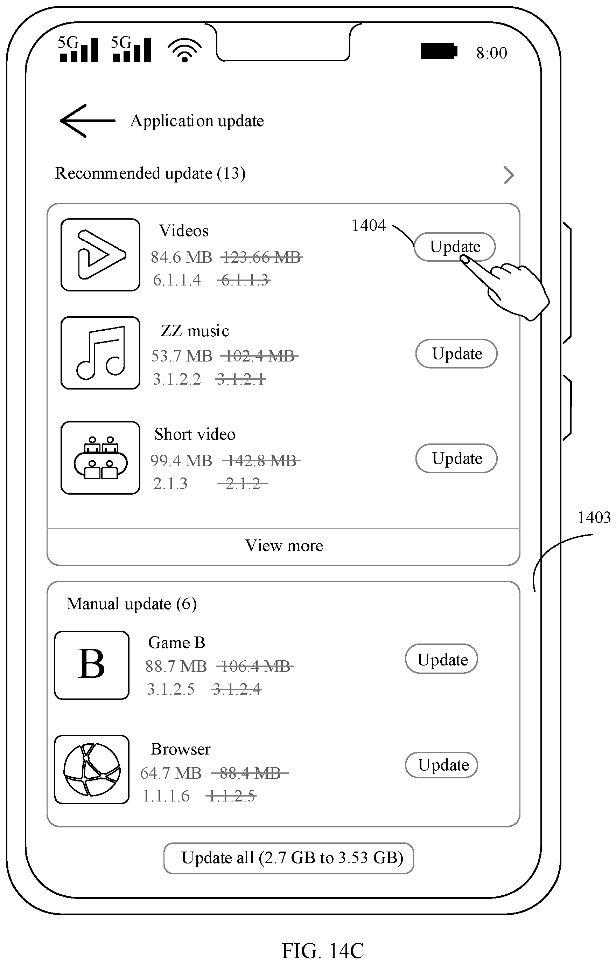

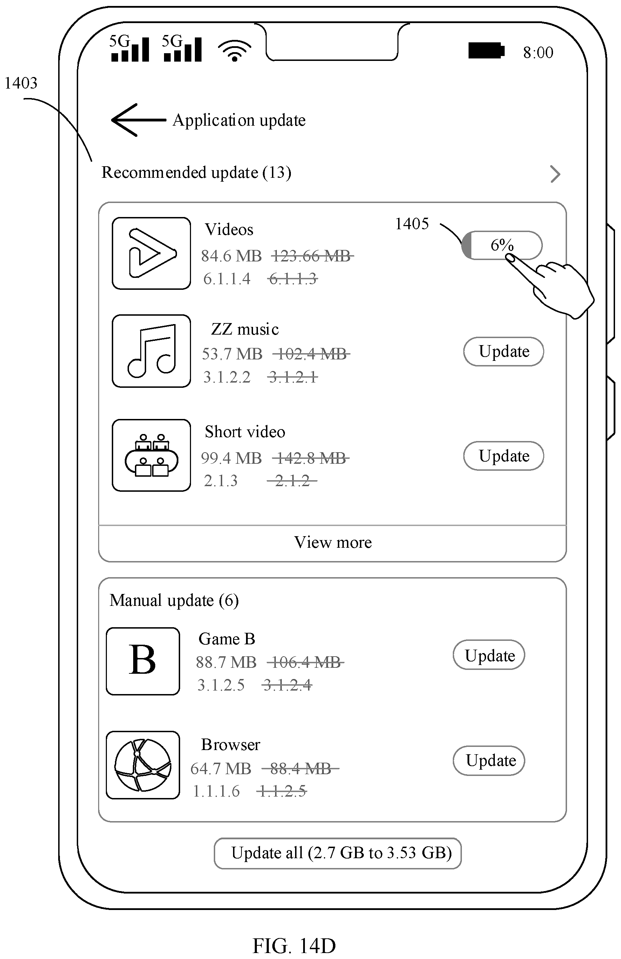

In the second manner, as shown in FIG. 14B, the user may select, in the upgrade setting interface 1306, an "Always allow upgrading via the application market 1402" option. In this case, the mobile phone jumps from the video application to an application update interface 1403 shown in FIG. 14C. The user may tap an update button 1404 of the video application in the application update interface 1403, to trigger an update operation of the video application, as shown in FIG. 14C. In this case, the user may see that the update button of the video application changes to a status identifier of "download progress 1405", as shown in FIG. 14D. In this case, the application market downloads a software upgrade package of the new version of the video application and corresponding private executable code from the cloud server. Specifically, the application market may send a request message Y to the cloud server, where the request message Y is used to request the cloud server to deliver the software upgrade package of the new version of the video application and the corresponding private executable code, and the request message Y includes but is not limited to a video application identifier and a device parameter (for example, a GPU version number and/or an OS version number) of the mobile phone. The cloud server may determine the software upgrade package (or a download address of the software upgrade package) of the new version of the video application and the corresponding private executable code (or a download address of the private executable code) based on the video application identifier and the device parameter of the mobile phone. For details, refer to related descriptions of step 1006. Details are not described herein again.

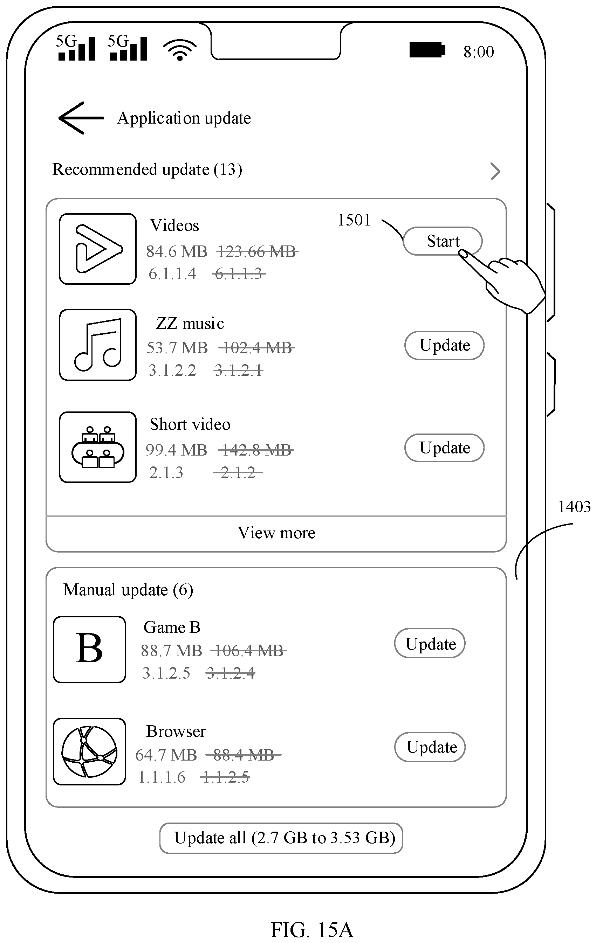

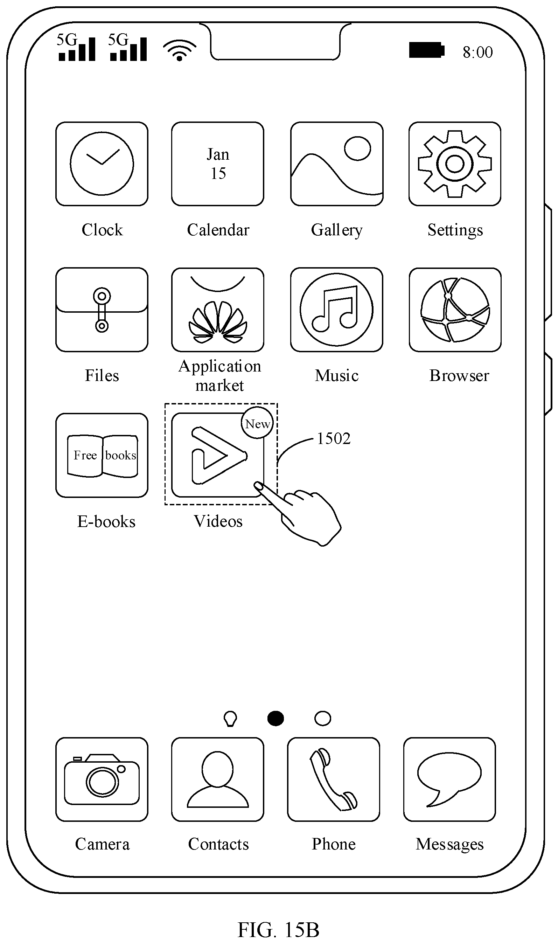

After determining the software upgrade package of the new version of the video application and the corresponding private executable code, the cloud server may deliver the software upgrade package and the corresponding private executable code to the application market through the distribution module in FIG. 5B. After receiving the software upgrade package and the corresponding private executable code, the application market automatically installs the software upgrade package and updates previous private executable code stored in the local file system module based on the corresponding private executable code. After the installation is completed, the status of the video application in the application update interface 1403 changes from the update button to a start button 1501. The user may start the updated video application by tapping the start button 1501, as shown in FIG. 15A. In addition, after the installation is completed, a shortcut icon 1502 of the new version of the video application is generated in the main interface of the mobile phone, and the user may start the video application by double-tapping the shortcut icon 1502, as shown in FIG. 15B.

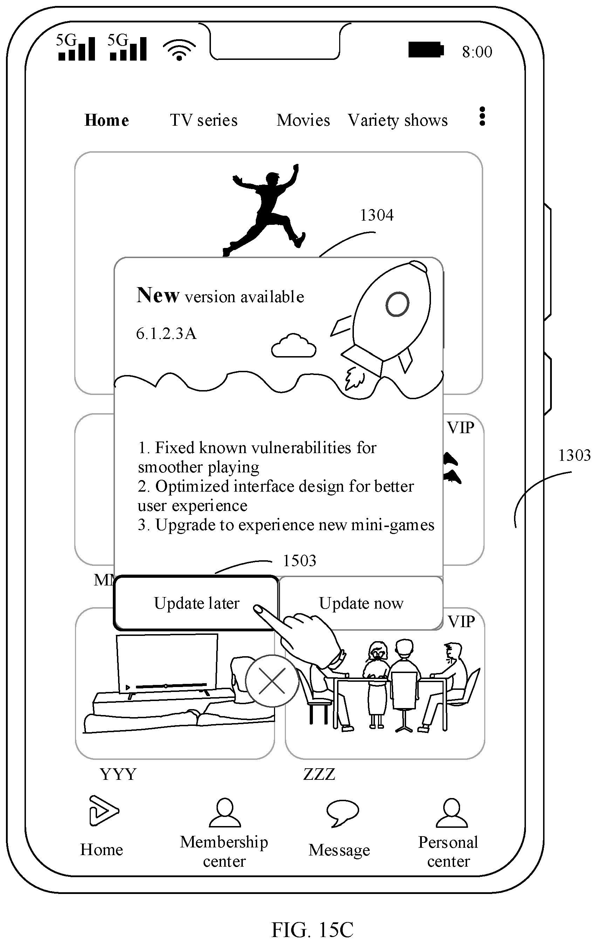

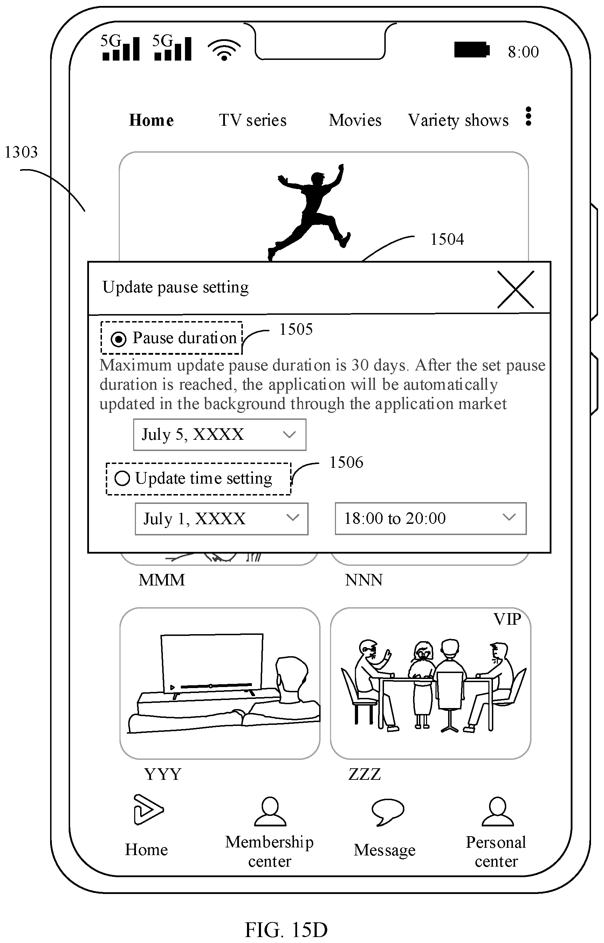

In some other embodiments, for example, as shown in FIG. 15C, when the user selects an "Update later 1503" option on the update reminder interface 1304, it indicates that the user may not want to perform upgrade now. In this case, as shown in FIG. 15D, an update pause setting interface 1504 is generated in the user interface 1303, and the user may set, in the update pause setting interface 1504, desired pause duration or desired update time. For example, as shown in FIG. 15D, when the user selects a "Pause duration 1505" option, the user may set the pause duration. For example, if a current date is "June 20, xxxx", the user may choose to pause update until "July 5, xxxx". Maximum pause duration of the "Pause duration 1505" option that can be set is 30 days. When the pause duration is reached, the video application is automatically updated. An automatic update manner may be the foregoing "Manner 1" (or "Manner 2") by default. For another example, when selecting an "Update time setting 1506" option, the user may set a time period in which update is to be performed. For example, the user may set that the automatic update is to be performed during a time period of "18:00 to 20:00 on July 1, xxxx". The automatic update manner of the video application may be the foregoing "Manner 1" (or "Manner 2") by default.

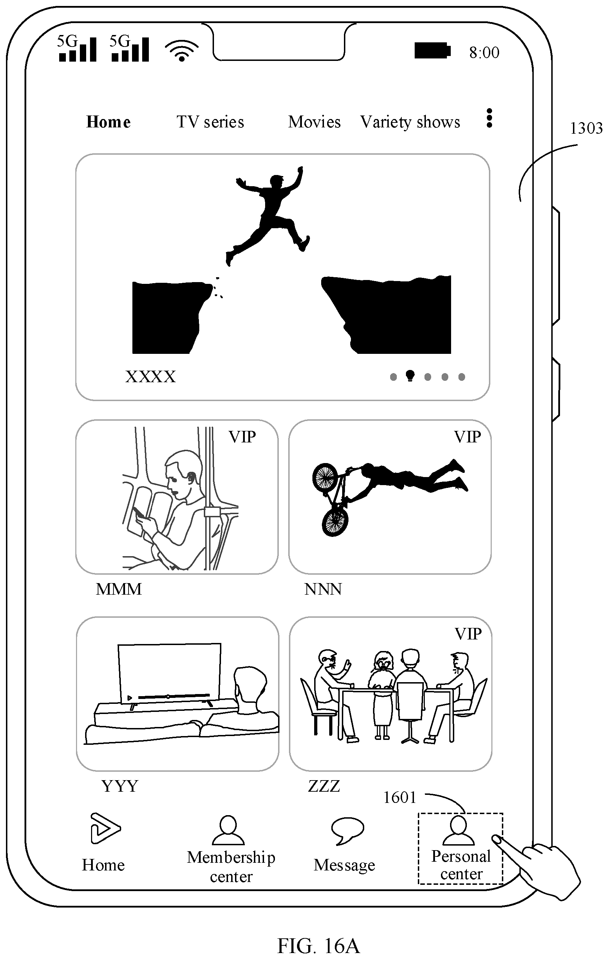

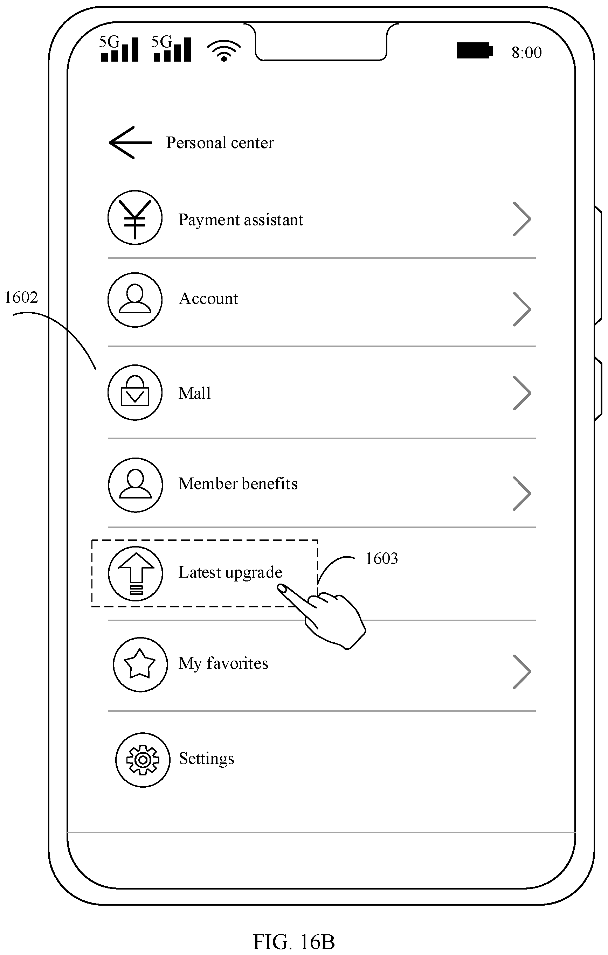

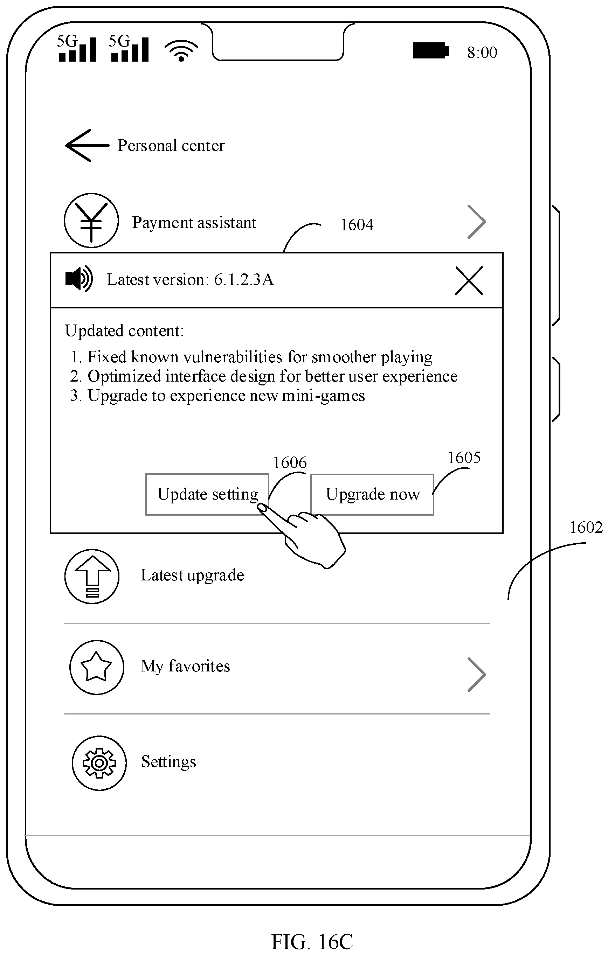

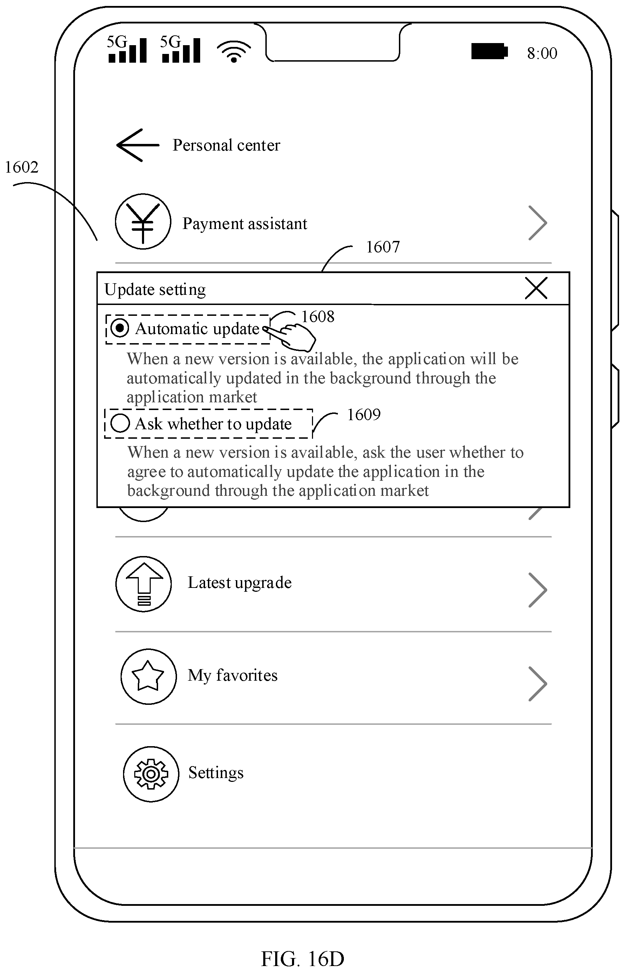

In some other embodiments, the user may set the update of the video application by the user. For example, as shown in FIG. 16A, the user may tap a "Personal center 1601" option in the user interface 1303 of the video application. In this case, the mobile phone jumps from the user interface 1303 to a personal center interface 1602, as shown in FIG. 16A. The user may select a "Latest upgrade 1603" option in the personal center interface 1602. In this case, a "latest version information" prompt box 1604 is displayed in the personal center interface 1602, as shown in FIG. 16C. The user may select an "Upgrade now 1605" option on the prompt box 1604, or may select an "Update setting 1606" option. If the user selects the " Upgrade now 1605" option, the upgrade setting interface 1306 that is the same as that in FIG. 13D is displayed in the personal center interface 1602. For details, refer to related descriptions in FIG. 13D and FIG. 14A to FIG. 14D. Details are not described herein again. If the user selects the "Update setting 1606" option, an update setting interface 1607 shown in FIG. 16D is generated in the personal center interface 1602. The user may set an update manner in the "update setting interface 1607". For example, if the user selects an "Automatic update 1608" option, the video application will be automatically updated when a new version is released next time, and the user will not be asked whether to update the video application now. If the user selects an "Ask whether to update 1609" option, the user is first asked whether to update the video application when a new version of the video application is released next time, and the video application is not automatically updated, as shown in FIG. 16D.

### Embodiment 3: Application market update scenario

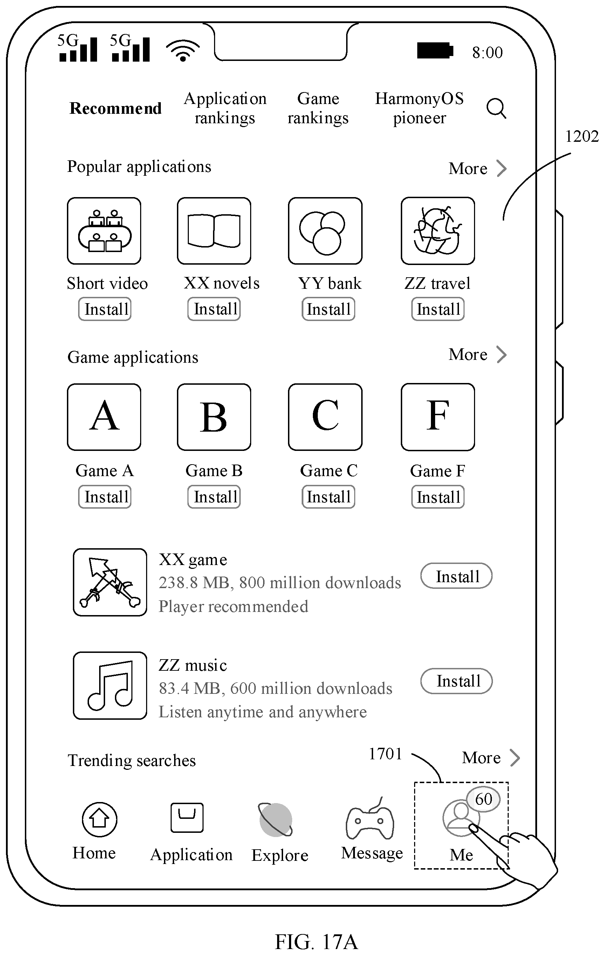

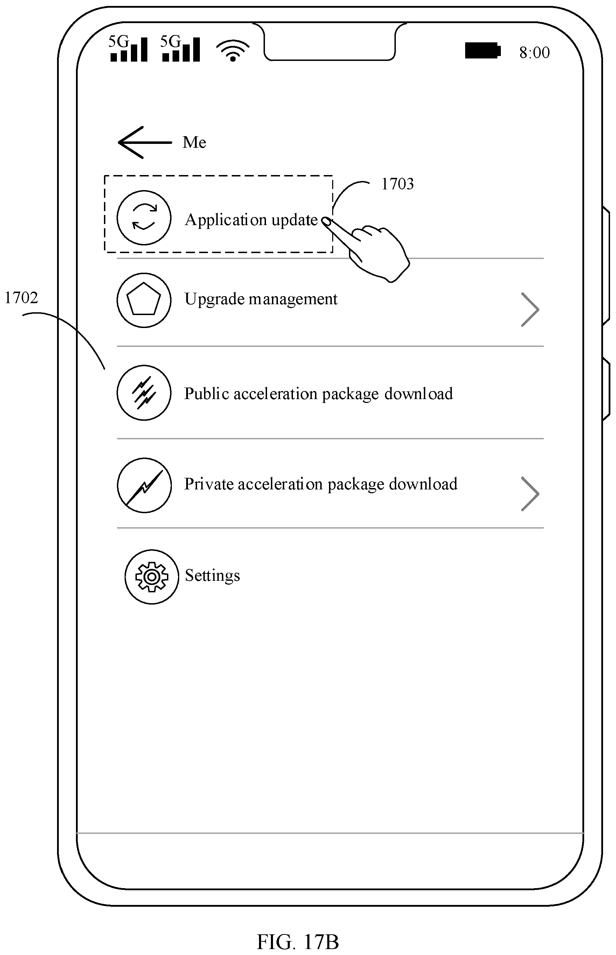

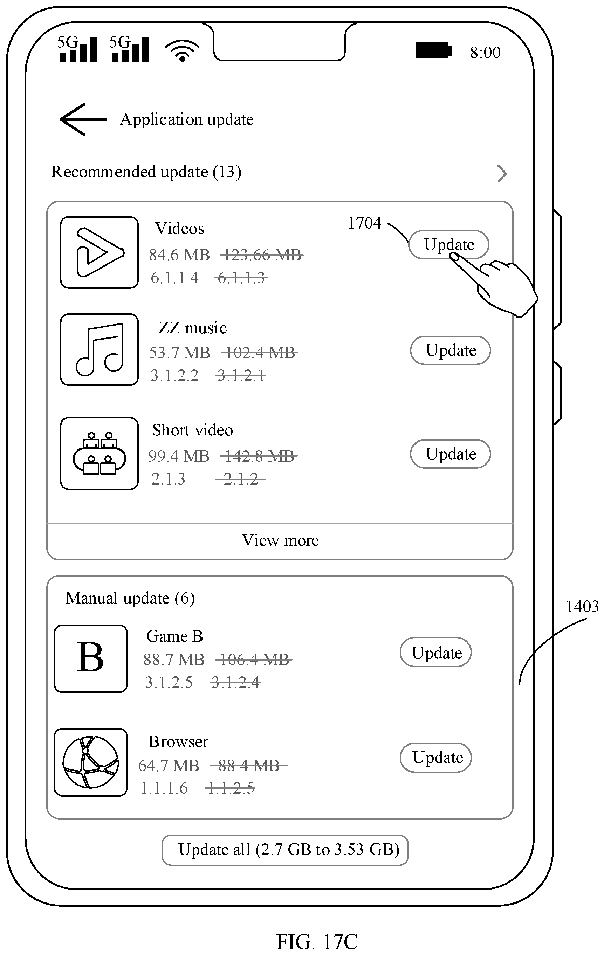

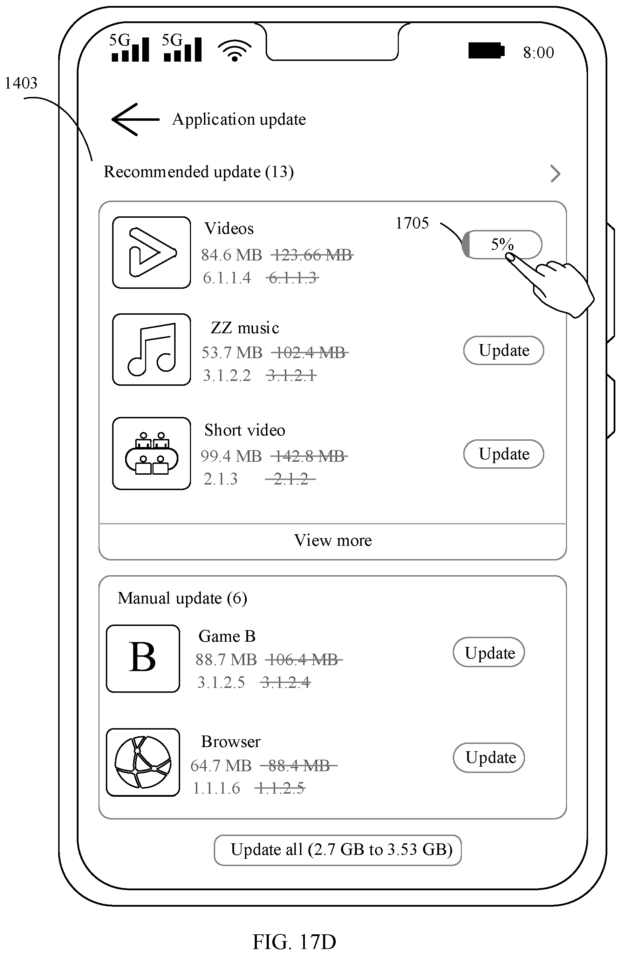

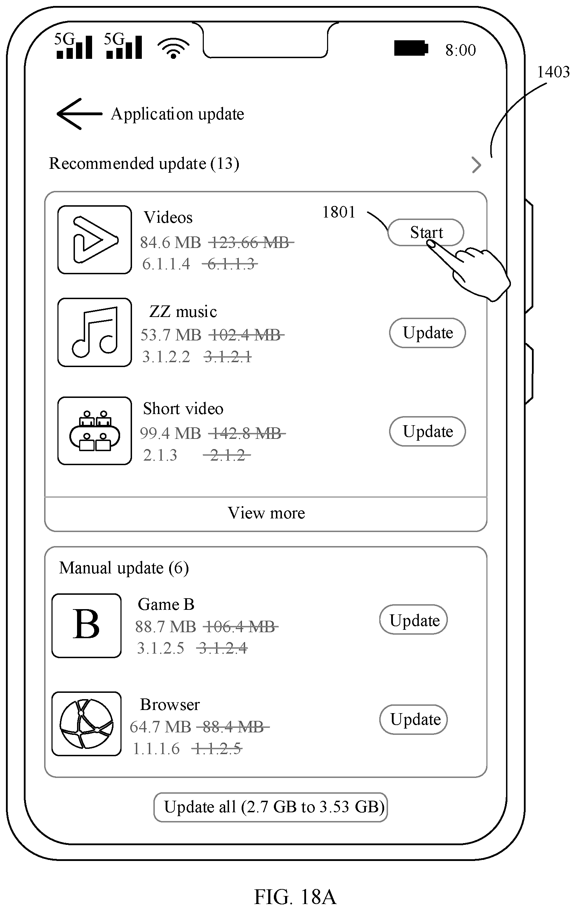

In some embodiments, a user may update a current application through an application market. For example, as shown in FIG. 12A, the user may double-tap a shortcut icon 1201 of the application market in a main interface of a mobile phone, so that the mobile phone enters a recommendation interface 1202 of the application market. After the mobile phone enters the recommendation interface 1202, as shown in FIG. 17A, the user may tap a "Me" option 1701 in the recommendation interface 1202, to open a "Me" main interface 1702 (refer to FIG. 17B). In this case, the user may select an "Application update" option 1703 in the "Me" main interface 1702, so that the mobile phone jumps from the "Me" main interface 1702 to an "application update interface 1403", and the user may select, in the application update interface 1403, an application that needs to be updated, as shown in FIG. 17C. For example, the user may tap an "Update 1704" button of the video application to trigger an update operation, as shown in FIG. 17C. In this case, the user may see that the update button 1704 of the video application changes to a status identifier "download progress 1705", as shown in FIG. 17D. In this case, the application market downloads a software upgrade package of a new version of the video application and corresponding private executable code from a cloud server. For details, refer to related descriptions of the automatic update manner like "Manner 2" in Embodiment 2. Details are not described herein again. After receiving the software upgrade package and the corresponding private executable code that are delivered by the cloud server, the application market automatically installs the software upgrade package, and updates, based on the delivered private executable code, previous private executable code stored in the local file system module. After the installation is completed, as shown in FIG. 18A, a status of the video application in the application update interface 1403 changes from the update button to a start button 1801. The user may start the updated video application by tapping the "start button 1801".

### Embodiment 4: Manners of downloading public executable code and private executable code

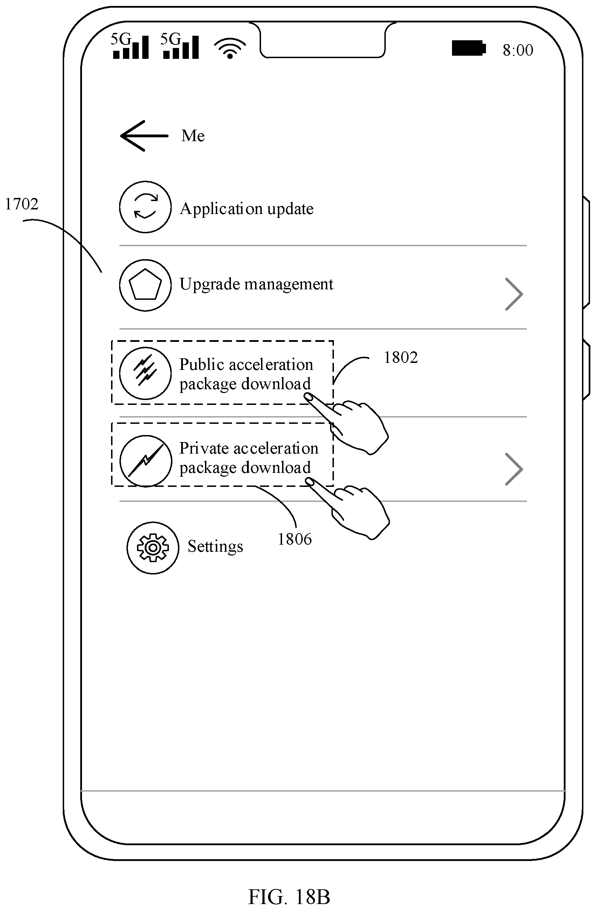

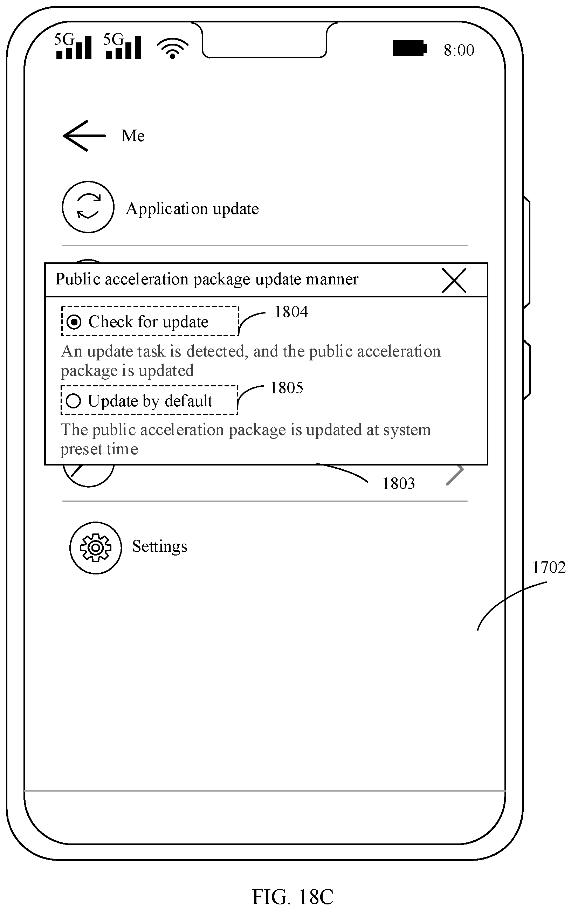

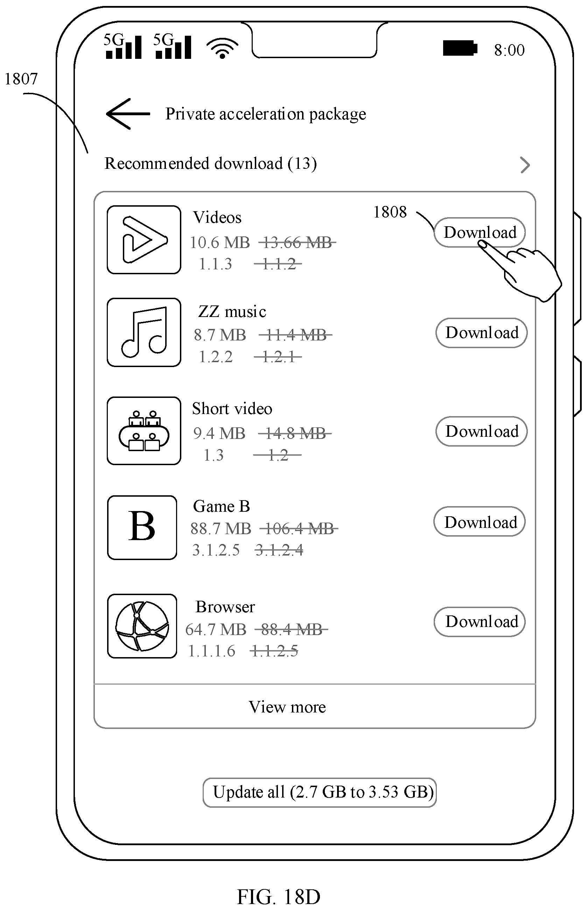

In some embodiments, as shown in FIG. 18B, the user may select a "Public acceleration package download 1802" option in the "Me" main interface 1702. In this case, as shown in FIG. 18C, the application market generates a "Public acceleration package update manner" setting interface 1803 in the "Me" main interface 1702. The user may select a public acceleration package update manner in the setting interface 1803. For example, as shown in FIG. 18C, if the user selects a "Check for update 1804" option, when detecting that an application on the mobile phone is updated, the application market obtains public executable code from the cloud server (for example, the application market invokes a cloud server interface to query a download address of the public executable code to download the public executable code), to ensure that public executable code stored in the local file system module is consistent with latest public executable code on the cloud server. If the user selects an "Update by default 1805" option, the application market obtains the public executable code from the cloud server at a time interval set by a system (that is, the application market obtains the public executable code from the cloud server in a preset time period). For another example, as shown in FIG. 18B, the user may select a "Private acceleration package download 1806" option in the "Me" main interface 1702. In this case, the application market jumps from the "Me" main interface 1702 to a "private acceleration package" download interface 1807 shown in FIG. 18D. The user may select, in the download interface 1807, a private acceleration package corresponding to an application that needs to be downloaded. For example, as shown in FIG. 18D, the user may tap a "Download button 1808" corresponding to the "video application". In this case, after receiving a download instruction corresponding to the download operation, the application market obtains, from the cloud server, private executable code corresponding to the video application, to ensure that the private executable code of the video application stored in the local file system module is consistent with private executable code corresponding to a latest video application on the cloud server. Specifically, the application market may send a request message Z to the cloud server, where the request message Z is used to request the cloud server to deliver private executable code corresponding to a new version of the video application, and the request message Y includes but is not limited to a video application identifier and a device parameter (for example, a GPU version number and/or an OS version number) of the mobile phone. The cloud server may determine private executable code (or a download address of the private executable code) corresponding to the new version of the video application based on the video application identifier (that is, an example of the first application identifier) and the device parameter (that is, an example of the third parameter) of the mobile phone, and delivers the private executable code (or the download address of the private executable code) to the application market. For details, refer to related descriptions of step 1006. Details are not described herein again.

The foregoing describes in detail examples of the compilation method provided in this application. It may be understood that, to implement the foregoing functions, the electronic device includes a corresponding hardware structure and/or software module for performing each of the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. In this application, the compilation method may be divided into functional units based on the foregoing method examples. For example, each functional unit may be obtained through division based on each function, or two or more functions may be integrated into one unit. The integrated unit may be implemented in a form of hardware, or may be implemented in a form of software functional unit. It should be noted that, in this application, unit division is an example, and is merely logical function division. In actual implementation, another division manner may be used.

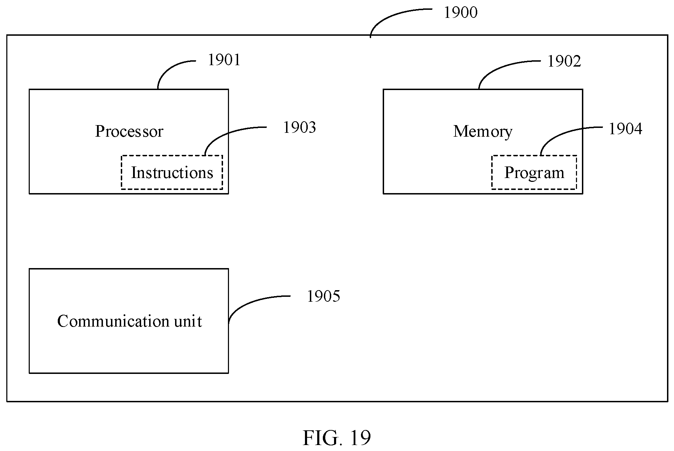

FIG. 19 is a diagram of a structure of an electronic device according to this application. A dashed line in FIG. 19 indicates that a unit or a module is optional. An electronic device 1900 may be configured to implement the methods described in the foregoing method embodiments. The electronic device 1900 may be a server, a terminal device, or a chip (system).

The electronic device 1900 includes one or more processors 1901. The one or more processors 1901 may support the electronic device 1900 in implementing the method in the method embodiment corresponding to FIG. 6. The processor 1901 may be a general-purpose processor or a dedicated processor. For example, the processor 1901 may be a central processing unit (central processing unit, CPU). The CPU may be configured to: control the electronic device 1900, execute a software program, and process data of the software program. The electronic device 1900 may further include a communication unit 1905, configured to implement signal input (receiving) and output (sending).

The electronic device 1900 may be a chip (system). The chip (system) includes a memory and a processor. The processor is configured to execute a computer program stored in the memory, to implement the methods shown in the foregoing embodiments.

The communication unit 1905 may be an input and/or output circuit of the chip (system), or the communication unit 1905 may be a communication interface of the chip (system). The chip (system) may be used as a component of the electronic device 1900.

For another example, the communication unit 1905 may be a transceiver of the electronic device 1900, or the communication unit 1905 may be a transceiver circuit of the electronic device 1900. The electronic device 1900 may include one or more memories 1902. The memory 1902 stores a program 1904. The program 1904 may be run by the processor 1901 to generate instructions 1903, to enable the processor 1901 to perform, based on the instructions 1903, the methods described in the foregoing method embodiments. Optionally, the memory 1902 may further store data. Optionally, the processor 1901 may further read the data stored in the memory 1902. The data and the program 1904 may be stored at a same storage address, or the data and the program 1904 may be stored at different storage addresses.

The processor 1901 and the memory 1902 may be disposed separately, or may be integrated together, for example, integrated on a system on chip (system on chip, SOC) of the electronic device. For a specific manner in which the processor 1901 executes the compilation method, refer to related descriptions in the method embodiments.

It should be understood that the steps in the foregoing method embodiments may be completed by using a logic circuit in a form of hardware or instructions in a form of software in the processor 1901. The processor 1901 may be a CPU, a digital signal processor (digital signal processor, DSP), a field programmable gate array (field programmable gate array, FPGA), or another programmable logic device, for example, a discrete gate, a transistor logic device, or a discrete hardware component.

This application further provides a computer program product. When the computer program product is executed by the processor 1901, the method according to any one of the method embodiments of this application is implemented. The computer program product may be stored in the memory 1902. For example, the computer program product is the program 1904. After processing processes such as preprocessing, compilation, assembly, and linking, the program 1904 is finally converted into an executable target file that can be executed by the processor 1901.

This application further provides a computer-readable storage medium. The computer-readable storage medium stores a computer program. When the computer program is executed by a computer, the method according to any one of the method embodiments of this application is implemented. The computer program may be a high-level language program, or may be an executable target program.

The computer-readable storage medium is, for example, the memory 1902. The memory 1902 may be a volatile memory or a non-volatile memory, or the memory 1902 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or a flash memory. The volatile memory may be a random access memory (random access memory, RAM) that is used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It may be clearly understood by a person skilled in the art that, for ease and brevity of description, for a specific working process and a generated technical effect of the foregoing apparatus and device, refer to a corresponding process and technical effect in the foregoing method embodiments, and details are not described herein again.

In the several embodiments provided in this application, the disclosed systems, apparatuses, and methods may be implemented in other manners. For example, some features of the method embodiments described above may be ignored or not performed. The apparatus embodiment described above is merely an example. Division into the units is merely logical function division, and may be other division during actual implementation. A plurality of units or components may be combined or integrated into another system. In addition, coupling between the units or coupling between the components may be direct coupling or indirect coupling. The coupling may include an electrical connection, a mechanical connection, or another form of connection.

The foregoing embodiments are merely intended for describing the technical solutions of this application, but not for limiting the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

Finally, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A compilation method, applied to a first device, wherein the method comprises:
obtaining L types of shader source code, wherein the L types of shader source code are source code corresponding to shaders of L applications, and L is an integer greater than 1;
determining public source code from the L types of shader source code, wherein the public source code is a common part of the L types of shader source code;
compiling the public source code to obtain N types of public executable code, wherein the N types of public executable code are used to adapt to N running environments, and N is a positive integer; and
sending target public executable code to a second device, wherein the target public executable code is code that adapts to a running environment of the second device in the N types of public executable code.

2. The method according to claim 1, wherein the method further comprises:
determining M types of private source code from the L types of shader source code, wherein the M types of private source code are the portions of the L types of shader source code excluding the public source code, and M is a positive integer less than or equal to L;
separately compiling the M types of private source code to obtain K types of private executable code, wherein the K types of private executable code are used to adapt to the N running environments, K=M*N, and K is a positive integer; and
sending target private executable code to the second device, wherein the target private executable code is code that adapts to the running environment of the second device in the K types of private executable code.

3. The method according to claim 1 or 2, wherein obtaining the L types of shader source code comprises:
obtaining the L types of shader source code from at least one terminal device, wherein the at least one terminal device is configured to run the L applications.

4. The method according to claim 3, wherein the obtaining the L types of shader source code from the at least one terminal device comprises:
obtaining the L types of shader source code from a shader of the at least one terminal device, wherein a running mode of the shader is a debugging mode.

5. The method according to claim 4, wherein the first device comprises a collection module, the collection module is configured to obtain shader source code, and the obtaining the L types of shader source code from the shader of the at least one terminal device comprises:
obtaining the L types of shader source code from the shader of the at least one terminal device using the collection module, wherein the running mode of the shader is the debugging mode.

6. The method according to claim 3, wherein the first device comprises a collection module, the collection module is configured to obtain shader source code, and the obtaining the L types of shader source code from the at least one terminal device comprises:
obtaining the L types of shader source code from the at least one terminal device using the collection module.

7. The method according to any one of claims 2 to 6, wherein the determining the M types of private source code from the L types of shader source code comprises:
determining the M types of private source code from the L types of shader source code based on a first parameter, wherein the first parameter comprises use frequency information, and M is less than L.

8. The method according to any one of claims 1 to 7, wherein the determining the public source code from the L types of shader source code comprises:
determining the public source code from the L types of shader source code based on the first parameter, wherein the first parameter comprises the use frequency information.

9. The method according to any one of claims 2 to 8, wherein the separately compiling the M types of private source code comprises:
separately compiling the M types of private source code based on a second parameter, wherein the second parameter comprises at least one of a GPU version number or an OS version number.

10. The method according to any one of claims 1 to 9, wherein the compiling the public source code comprises:
compiling the public source code based on the second parameter, wherein the second parameter comprises at least one of the graphics processing unit GPU version number or the operating system OS version number.

11. The method according to any one of claims 2 to 10, wherein before the sending the target private executable code to the second device, the method further comprises:
receiving second request information from the second device, wherein the second request information is used to request to download a software installation package of a first application, and the first application is one of the L applications; and
the sending the target private executable code to the second device comprises:
sending the software installation package of the first application and the target private executable code to the second device in response to the second request information.

12. The method according to claim 11, wherein the second request information comprises a third parameter and a first application identifier, the third parameter is used to determine the running environment of the second device, and before the sending the software installation package of the first application and the target private executable code to the second device, the method further comprises:
determining the target private executable code from the K types of private executable code based on the third parameter and the first application identifier.

13. The method according to any one of claims 1 to 12, wherein before the sending the target public executable code to the second device, the method further comprises:
receiving first request information from the second device, wherein the first request information is used to request to obtain the target public executable code; and
the sending the target public executable code to the second device comprises:
sending the target public executable code to the second device in response to the first request information.

14. The method according to claim 13, wherein the receiving the first request information from the second device comprises:
receiving the first request information from the second device within a preset time period.

15. The method according to claim 13 or 14, wherein the first request information comprises the third parameter, and the third parameter is used to determine the running environment of the second device; and
before the sending the target public executable code to the second device, the method further comprises:
determining the target public executable code from the N types of public executable code based on the third parameter.

16. The method according to claim 12 or 15, wherein the third parameter comprises at least one of the GPU version number of the second device or the OS version number of the second device.

17. A compilation method, applied to a second device, wherein the method comprises:
sending first request information, wherein the first request information is used to request to obtain target public executable code, the target public executable code is code that adapts to a running environment of the second device in N types of public executable code, the N types of public executable code are a compilation result of public source code, the public source code is a common part of L types of shader source code, the L types of shader source code are source code corresponding to shaders of L applications, L is an integer greater than 1, and N is a positive integer; and
receiving the target public executable code.

18. The method according to claim 17, wherein the sending the first request information comprises:
sending the first request information within a preset time period.

19. The method according to claim 17 or 18, wherein the first request information comprises a third parameter, and the third parameter is used to determine the running environment of the second device, and is further used to determine the target public executable code.

20. The method according to any one of claims 17 to 19, wherein the method further comprises:
sending second request information, wherein the second request information is used to request to download a software installation package of a first application, and the first application is one of the L applications; and
receiving the software installation package of the first application and the target private executable code.

21. The method according to claim 20, wherein the second request information comprises the third parameter and a first application identifier, the third parameter is used to determine the running environment of the second device, and the third parameter and the first application identifier are used to determine the target private executable code.

22. The method according to claim 19 or 21, wherein the third parameter comprises at least one of a GPU version number of the second device or an OS version number of the second device.

23. The method according to any one of claims 20 to 22, wherein before the sending the second request information, the method further comprises:
receiving a first operation instruction, wherein the first operation instruction is used to trigger downloading of the software installation package of the first application; and
generating the second request information based on the first operation instruction.

24. The method according to claim 23, wherein the receiving the first operation instruction comprises:
receiving the first operation instruction from a display interface of an application market, wherein the application market is run on the second device, and the first operation instruction is an installation instruction or an update instruction.

25. The method according to claim 24, wherein the receiving the first operation instruction comprises:
receiving the first operation instruction from the display interface of the first application, wherein the first operation instruction is the update instruction.

26. The method according to any one of claims 23 to 25, wherein before the generating the second request information based on the first operation instruction, the method further comprises:
instructing, based on the first operation instruction, the application market to generate the second request information, wherein the application market is run on the second device.

27. An electronic device, wherein the electronic device comprises a processor and a memory, the memory is configured to store a computer program, and the processor is configured to invoke the computer program from the memory and run the computer program, to enable the electronic device to perform the method according to any one of claims 1 to 16, or to enable the electronic device to perform the method according to any one of claims 17 to 26.

28. A computer-readable storage medium, wherein the computer-readable storage medium stores a computer program, and when the computer program is executed by a processor, the processor is enabled to perform the method according to any one of claims 1 to 16, or the processor is enabled to perform the method according to any one of claims 17 to 26.

29. A chip system, wherein the chip system comprises a memory and a processor, and the processor is configured to execute a computer program stored in the memory, to implement the method according to any one of claims 1 to 16, or implement the method according to any one of claims 17 to 26.
